# EUROPEAN PATENT APPLICATION

(11) **EP 4 459 709 A1**
(43) Date of publication of application: **06.11.2024**
(21) Application number: 22950712.4
(22) Date of filing: 15.07.2022
(51) Int. Cl.: H01M 4/36, H01M 4/56

(54) **POSITIVE ELECTRODE ACTIVE MATERIAL AND PREPARATION METHOD THEREFOR, POSITIVE POLE PIECE, SECONDARY BATTERY, BATTERY MODULE, BATTERY PACK AND ELECTRICAL APPARATUS**

(71) Applicant: Contemporary Amperex Technology Co., Limited, Ningde, Fujian 352100 (CN)
(72) Inventor: XU, Xiaofu, Ningde, Fujian 352100 (CN); JIANG, Yao, Ningde, Fujian 352100 (CN); LIU, Qian, Ningde, Fujian 352100 (CN); YE, Yonghuang, Ningde, Fujian 352100 (CN)
(74) Representative: Jacob, Reuben Ellis
(86) International application number: PCT/CN2022/105998
(87) International publication number: WO 2024/011594

(57) **Abstract**

This application provides a mixed positive electrode active material and a preparation method thereof, a positive electrode plate, a secondary battery, a battery module, a battery pack, and an electric apparatus. The positive electrode active material includes a first positive electrode active material and a second positive electrode active material, where the first positive electrode active material includes a compound LiNi_{b}Co_{d}MnₑMfO₂, and the second positive electrode active material includes a compound LiₐAₓMn_{1-y}B_{y}P_{1-z}C_{z}O₄₋ₙDₙ. In this application, with the first positive electrode active material and the second positive electrode active material mixed, the cycling capacity retention rate of the secondary battery is improved, the cycle life of the secondary battery is extended, and the safety of the secondary battery is improved.

## Description

### TECHNICAL FIELD

This application relates to the field of secondary battery technologies, and in particular, to a positive electrode active material and a preparation method thereof, a positive electrode plate, a secondary battery, a battery module, a battery pack, and an electric apparatus.

### BACKGROUND

In recent years, secondary batteries are in increasingly wide use. Secondary batteries are widely used in energy storage power supply systems such as hydroelectric power plants, thermal power plants, wind power plants, and solar power plants, and many other fields including electric tools, electric bicycles, electric motorcycles, electric vehicles, military equipment, and aerospace. Due to great development of the secondary batteries, higher requirements are imposed on energy density, cycling performance, safety performance, and the like of the secondary batteries. As an existing positive electrode active material for secondary batteries, lithium manganese phosphate is prone to Li/Mn antisite defects and severe dissolution of manganese during charging and discharging, which affects the gram capacity of secondary batteries and leads to poor safety performance and cycling performance of secondary batteries.

### SUMMARY

This application has been made in view of the foregoing issues. An objective of this application is to provide a positive electrode active material, a preparation method of the positive electrode active material, a positive electrode plate, a secondary battery, a battery module, a battery pack, and an electric apparatus so as to solve the problems of low cycling capacity retention rate, short cycle life, and low safety of secondary batteries prepared by using a prior-art positive electrode active material.

To achieve the foregoing purpose, a first aspect of this application provides a positive electrode active material including a first positive electrode active material and a second positive electrode active material; where
the first positive electrode active material includes a compound LiNi_{b}Co_{d}MnₑM_{f}O₂, where b is selected from the range of 0.314-0.970; d is selected from the range of 0-0.320 and optionally the range of 0.047-0.320; e is selected from the range of 0.006-0.390; a sum of b, d, e, and f is 1 with f greater than 0; and M is one or more elements selected from Mn, Al, Mg, Ca, Na, Ti, W, Zr, Sr, Cr, Zn, Ba, B, S, and Y and optionally M is Mg and/or Al; and
the second positive electrode active material includes a compound LiₐAₓMn_{1-y}B_{y}P_{1-z}C_{z}O₄₋ₙDₙ, where a is selected from the range of 0.9-1.1; x is selected from the range of 0.001-0.1; y is selected from the range of 0.001-0.5; z is selected from the range of 0.001-0.1; n is selected from the range of 0.001-0.1; A is one or more elements selected from Zn, Al, Na, K, Mg, Nb, Mo, and W; B is one or more elements selected from Ti, V, Zr, Fe, Ni, Mg, Co, Ga, Sn, Sb, Nb, and Ge; C is one or more elements selected from B (boron), S, Si, and N; and D is one or more elements selected from S, F, Cl, and Br.

Thus, the applicant has surprisingly found that: with the second positive electrode active material obtained by doping a specific amount of a specific element at the Li, Mn, P, and O sites of the compound LiMnPO₄, significantly improved rate performance can be obtained; the dissolution of Mn and doping elements at the Mn site is significantly reduced; significantly improved cycling performance and/or high-temperature stability is obtained; and the gram capacity and compacted density of the material are also increased, with interfacial side reactions reduced. However, the second positive electrode active material has only one-dimensional lithium ion transport channels, while the first positive electrode active material is a layered transition metal oxide and has two-dimensional lithium ion transport channels. Therefore, in this application, the first positive electrode active material is mixed with the second positive electrode active material, leveraging the complementary advantages of the two materials, so that the cycling capacity retention rate of the secondary battery is increased, the cycle life of the secondary battery is extended, and the safety of the secondary battery is improved.

Unless otherwise specified, in the chemical formula LiₐAₓMn_{1-y}B_{y}P_{1-z}C_{z}O₄₋ₙDₙ, when A is more than two elements, the foregoing limitation on the value range of y is not only a limitation on the stoichiometric number of each element as A but also a limitation on the sum of the stoichiometric numbers of each element as A. For example, when A is more than two elements A1, A2, ..., An, the stoichiometric numbers x1, x2, ..., xn of each of A1, A2, ..., An must fall within the value range defined by this application for x, and the sum of x1, x2, ..., xn must also fall within the value range. Similarly, under the condition that B, C, and D are more than two elements, the limitation on the value ranges of the stoichiometric numbers of B, C, and D in this application also has the foregoing meaning. Similarly, under the condition that M is more than two elements in the chemical formula LiNi_{b}Co_{d}MnₑM_{f}O₂, the limitation on the value range of the stoichiometric number of M in this application also have the foregoing meaning.

In any embodiment, mass of the first positive electrode active material is m₁, mass of the second positive electrode active material is m₂, and the value of m₁/(m₁+m₂) is 2%-55% and optionally 3%-50%. Thus, the mass percentage of the first positive electrode active material in the two positive electrode active materials is within the foregoing range, which can improve the overall stability and safety of the positive electrode active material.

In any embodiment, the value of b×m₁/(m₁+m₂) is 0.017-0.457 and optionally 0.025-0.415. This can further improve the overall stability and safety of the positive electrode active material.

In any embodiment, the first positive electrode active material is a monocrystalline or quasi-monocrystalline material, and the particle size Dᵥ50 of the first positive electrode active material is less than or equal to 5.8 µm, optionally 2.3-5.8 µm, and more optionally 2.3-4.3 µm.

With the particle size of the monocrystalline or quasi-monocrystalline first positive electrode active material in the foregoing range, the electrochemical reaction area can be optimized, interfacial side reactions of the positive electrode during cycling of the secondary battery are further reduced and suppressed, the cycle decay rate of the secondary battery is reduced, and the cycle life of the secondary battery is extended.

In any embodiment, when the first positive electrode active material is a monocrystalline or quasi-monocrystalline material, d is selected from the range of 0.05-0.320 and optionally the range of 0.05-0.282; and/or
b is greater than 0.314 and less than 0.97 and optionally selected from the range of 0.55-0.869.

When the first positive electrode active material is a monocrystalline or quasi-monocrystalline material, d and b being in the foregoing ranges is favorable for further improving the conductivity and rate performance of the positive electrode active material, further improving the cycling capacity retention rate of the secondary battery and further extending the cycle life of the secondary battery.

In any embodiment, when the first positive electrode active material is a polycrystalline material, the particle size of the first positive electrode active material is Dᵥ50 of 3.5-13.5 µm; and/or
BET specific surface area of the first positive electrode active material is less than or equal to 1.32 m2/g and optionally 0.28-1.32 m2/g; and/or
compacted density of the first positive electrode active material under 3T pressure is greater than or equal to 2.92 g/cm³ and optionally 2.92-3.31 g/cm³.

With the particle size, specific surface area, and compacted density of the polycrystalline first positive electrode active material within the foregoing ranges, the rate performance of the positive electrode active material can be further improved, interfacial side reactions of the positive electrode during cycling of the secondary battery are further reduced and suppressed, the cycle decay rate of the secondary battery is reduced, and the cycle life of the secondary battery is extended.

In any embodiment, the first positive electrode active material further includes lithium carbonate and/or lithium hydroxide;
optionally, based on mass of the first positive electrode active material, a mass percentage of the lithium carbonate is less than or equal to 1%, and/or a mass percentage of the lithium hydroxide is less than or equal to 1%.

Residual water molecules introduced by the second positive electrode active material may react with the electrolyte to generate HF. HF can easily cause damage to the positive electrode active material itself or the SEI film on the negative electrode plate, thereby affecting the lifespan of the secondary battery. The lithium carbonate and/or lithium hydroxide further included in the first positive electrode active material in this application can carry out neutralization reaction with HF, which reduces or suppress the destructive effect of HF on the positive electrode active material or the SEI film on the negative electrode plate, and thus further improves the cycle life of the secondary battery.

In any embodiment, in the second positive electrode active material, A is any one element selected from Zn, Al, Na, K, Mg, Nb, Mo, and W; B is at least two elements selected from Ti, V, Zr, Fe, Ni, Mg, Co, Ga, Sn, Sb, Nb, and Ge; C is any one element selected from B (boron), S, Si, and N; and D is any one element selected from S, F, Cl, and Br;
optionally, A is Mg or Nb, and/or
B is at least two elements selected from Fe, Ti, V, Co, and Mg, and more optionally is Fe and one or more elements selected from Ti, V, Co, and Mg, and/or
C is S, and/or
D is F.

With a doping element at the Li-site selected within the foregoing ranges, the lattice change rate during deintercalation of lithium can be further reduced, thereby further improving the rate performance of the secondary battery. With a doping element at the Mn-site selected within the foregoing ranges, the electron conductivity can be further improved and the lattice change rate can be further reduced, thereby improving the rate performance and gram capacity of the secondary battery. With a doping element at the P-site selected within the foregoing ranges, the rate performance of the secondary battery can be further improved. With a doping element at the O-site selected within the foregoing ranges, the interfacial side reactions can be further mitigated, and the high-temperature performance of the secondary battery can be improved.

In any embodiment, in the second positive electrode active material, x is selected from the range of 0.001-0.005; and/or
y is selected from the range of 0.01-0.5 and optionally the range of 0.25-0.5; and/or
z is selected from the range of 0.001-0.005; and/or
n is selected from the range of 0.001-0.005.

With a value of y selected within the foregoing range, the gram capacity and rate performance of the material can be further improved. With a value of x selected within the foregoing range, the kinetic performance of the material can be further improved. With a value of z selected within the foregoing range, the rate performance of the secondary battery can be further improved. With a value of n selected within the foregoing range, the high-temperature performance of the secondary battery can be further improved.

In any embodiment, a value of (1-y):y is selected from the range of 1-4 and optionally the range of 1.5-3, and a value of a:x is selected from the range of 9-1100 and optionally the range of 190-998. Thus, the energy density and cycling performance of the positive electrode active material can be further improved.

In any embodiment, the lattice change rate of the second positive electrode active material before and after complete deintercalation or intercalation of lithium is below 8% and optionally below 4%. The reduction of the lattice change rate enables the transport of Li ions easier; that is, Li ions have better migration capability in the material, which is conducive to improving the rate performance of the secondary battery. The lattice change rate can be measured by methods known in the art, for example, X-ray diffraction mapping (XRD).

In any embodiment, a Li/Mn antisite defect concentration of the second positive electrode active material is below 2% and optionally below 0.5%. The so-called Li/Mn anti site defect refers to the interchange of the Li⁺ and Mn²⁺ sites in LiMnPO₄ lattice. The Li/Mn antisite defect concentration refers to a percentage of Li⁺ interchanged with Mn²⁺ in the total amount of Li⁺ in the positive electrode active material. Antisite defects of Mn²⁺ hinders the Li⁺ transport. The reduction of the Li/Mn antisite defect concentration is conducive to improving the gram capacity and rate performance of the positive electrode active material. The Li/Mn antisite defect concentration may be measured by methods known in the art, such as XRD.

In any embodiment, a surface oxygen valence of the second positive electrode active material is lower than -1.82, and optionally is in the range of -1.89 to -1.98. The reduction of the surface oxygen valence of the positive electrode active material can mitigate the interfacial side reactions between the positive electrode active material and the electrolyte, thereby improving the cycling performance and high-temperature stability of the secondary battery. The surface oxygen valence can be measured by methods known in the art, such as electron energy loss spectroscopy (EELS).

In any embodiment, a compacted density of the second positive electrode active material under 3T is greater than 2.0 g/cm³ and optionally greater than 2.2 g/cm³. A higher compacted density indicates a large weight of the active material per unit volume. Therefore, increasing the compacted density is conducive to increasing the volumetric energy density of the cell. The compacted density can be measured according to GB/T 24533-2009.

In any embodiment, the second positive electrode active material further includes carbon, the carbon coating the surface of the compound LiₐAₓMn_{1-y}B_{y}P_{1-z}C_{z}O₄₋ₙDₙ. Thus, the conductivity of the positive electrode active material can be improved.

A second aspect of this application further provides a method for preparing positive electrode active material, including the following steps:
providing a first positive electrode active material and a second positive electrode active material; and
mixing the first positive electrode active material and the second positive electrode active material; where
the first positive electrode active material includes a compound LiNi_{b}Co_{d}MnₑM_{f}O₂ and the second positive electrode active material includes a compound LiₐAₓMn_{1-y}B_{y}P_{1-z}C_{z}O₄ₙDₙ, where a, b, d, e, f, x, y, z, n, M, A, B, C, and D are defined as set forth in the first aspect of this application;
optionally, the first positive electrode active material further includes lithium carbonate and/or lithium hydroxide; and
optionally, the second positive electrode active material further includes carbon coating the surface of the compound LiₐAₓMn_{1-y}B_{y}P_{1-z}C_{z}O₄₋ₙDₙ.

Thus, in this application, the first positive electrode active material is mixed with the second positive electrode active material, leveraging the complementary advantages of the two materials, so that the cycling capacity retention rate of the secondary battery is increased, the cycle life of the secondary battery is extended, and the safety of the secondary battery is improved.

A third aspect of this application provides a positive electrode plate including a positive electrode current collector and a positive electrode film layer disposed on at least one surface of the positive electrode current collector, where the positive electrode film layer includes the positive electrode active material according to the first aspect of this application or a positive electrode active material prepared by the method according to the second aspect of this application; and optionally, based on total weight of the positive electrode film layer, a percentage of the positive electrode active material in the positive electrode film layer is greater than 10% by weight and more optionally is 95%-99.5% by weight.

A fourth aspect of this application provides a secondary battery including the positive electrode active material according to the first aspect of this application or a positive electrode active material prepared by the method according to the second aspect of this application or the positive electrode plate according to the third aspect of this application.

A fifth aspect of this application provides a battery module, including the secondary battery according to the fourth aspect of this application.

A sixth aspect of this application provides a battery pack, including the battery module according to the fifth aspect of this application.

A seventh aspect of this application provides an electric apparatus, including at least one selected from the secondary battery according to the fourth aspect of this application, the battery module according to the fifth aspect of this application, and the battery pack according to the sixth aspect of this application.

### BRIEF DESCRIPTION OF DRAWINGS

FIG. 1 is a schematic diagram of a secondary battery according to an embodiment of this application.
FIG. 2 is an exploded view of the secondary battery according to the embodiment of this application in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application in FIG. 4.
FIG. 6 is a schematic diagram of an electric apparatus using a secondary battery as a power source according to an embodiment of this application.
FIG. 7 is an SEM image of a first positive electrode active material prepared in Preparation example A10 of this application.
FIG. 8 is an SEM image of a first positive electrode active material prepared in Preparation example A15 of this application.

### Description of reference signs:

1. battery pack; 2. upper box body; 3. lower box body; 4. battery module; 5. secondary battery; 51. housing; 52. electrode assembly; and 53. top cover assembly.

### DESCRIPTION OF EMBODIMENTS

The following specifically discloses embodiments of a positive electrode active material and a preparation method thereof, a positive electrode plate, a secondary battery, a battery module, a battery pack, and an electric apparatus in this application with appropriate reference to detailed descriptions of accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the method may further include step (c), indicating that step (c) may be added to the method in any order. For example, the method may include steps (a), (b), and (c), or steps (a), (c), and (b), or steps (c), (a), and (b), or the like.

Unless otherwise specified, "include" and "contain" mentioned in this application are inclusive or may be exclusive. For example, terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B" : A is true (or present) and B is false (or not present); A is false (or not present) and B is true (or present); or both A and B are true (or present).

### [Secondary battery]

Secondary batteries, also referred to as rechargeable batteries or storage batteries, are batteries whose active material can be activated for continuous use through charging after the batteries are discharged.

Generally, a secondary battery includes a positive electrode plate, a negative electrode plate, a separator, and an electrolyte. During charging and discharging of the battery, active ions (such as lithium ions) intercalate and deintercalate back and forth between the positive electrode plate and the negative electrode plate. The separator is sandwiched between the positive electrode plate and the negative electrode plate to mainly prevent short circuit between the positive and negative electrodes and to allow active ions to pass through. The electrolyte is between the positive electrode plate and the negative electrode plate, playing a role of conducting active ions.

### [Positive electrode active material]

One embodiment of this application provides a positive electrode active material including a first positive electrode active material and a second positive electrode active material; where,
the first positive electrode active material includes a compound LiNi_{b}Co_{d}MnₑM_{f}O₂, where b is selected from the range of 0.314-0.970 and optionally the range of 0.65-0.97; d is selected from the range of 0-0.320 and optionally the range of 0.047-0.320 or from the range of 0.005-0.188; e is selected from the range of 0.006-0.390 and optionally the range of 0.006-0.102; a sum of b, d, e, and f is 1 with f greater than 0; and M is one or more elements selected from Mn, Al, Mg, Ca, Na, Ti, W, Zr, Sr, Cr, Zn, Ba, B, S, and Y;
the second positive electrode active material includes a compound LiₐAₓMn_{1-y}B_{y}P_{1-z}C_{z}O₄₋ₙDₙ, where a is selected from the range of 0.9-1.1; x is selected from the range of 0.001-0.1; y is selected from the range of 0.001-0.5; z is selected from the range of 0.001-0.1; n is selected from the range of 0.001-0.1; A is one or more elements selected from Zn, Al, Na, K, Mg, Nb, Mo, and W, and optionally is Mg and/or Mo; B is one or more elements selected from Ti, V, Zr, Fe, Ni, Mg, Co, Ga, Sn, Sb, Nb, and Ge and optionally one or more elements selected from V, Fe, and Co; C is one or more elements selected from B (boron), S, Si, and N and optionally one or more elements selected from S, Si, and N; and D is one or more elements selected from S, F, Cl, and Br, and optionally is F.

The first positive electrode active material is a layered transition metal oxide with two-dimensional lithium ion transport channels; and the second positive electrode active material only has one-dimensional lithium ion transport channels. The two materials are mixed, leveraging their complementary advantages, which can improve the overall electrochemical performance. The first-cycle coulomb efficiency of the first positive electrode active material is usually lower than that of the second positive electrode active material. With the two materials mixed, the secondary battery still contains a significant amount of reversible lithium ions after the consumption for film-forming on the negative electrode in the chemical system, which improves the cycling capacity retention rate of the secondary battery, extends the cycle life of the secondary battery, and improves the safety of the secondary battery.

In addition, although the mechanism is not clear, this applicant has surprisingly found that: The second positive electrode active material in this application is obtained by element doping in the compound LiMnPO₄, where A, B, C, and D are elements respectively doped at the Li site, Mn site, P site, and O site of the compound LiMnPO₄. Without wishing to be bound by theory, the inventors of this application have found that the performance enhancement of lithium manganese phosphate is associated with a reduction in the lattice change rate of lithium manganese phosphate during deintercalation and intercalation of lithium and a reduction in surface activity. The reduction of the lattice change rate can reduce the difference in lattice constants between two phases at the grain boundary, reduce the interfacial stress, and enhance the Li⁺ transport capacity at the interface, thereby improving the rate performance of the positive electrode active material. High surface activity tends to lead to serious interfacial side reactions, exacerbating gas production, electrolyte consumption, and damaging the interface, thereby affecting the performance of the secondary battery, such as cycling performance. In this application, the lattice change rate is reduced by Li and Mn site doping. Mn site doping can also effectively reduce the surface activity, thus suppressing the dissolution of Mn and the interfacial side reactions between the positive electrode active material and the electrolyte. P site doping makes the rate of change of Mn-O bond length faster and reduces the small polaron migration barrier of the material, thus favoring the electron conductivity. O site doping has a good effect on reducing the interfacial side reactions. P site and O site doping also affect the dissolution of Mn caused by antisite defects and the kinetic performance. Therefore, the doping reduces the antisite defect concentration in the material, improves the kinetic performance and gram capacity of the material, and also changes the morphology of the particles, thereby increasing the compacted density. The applicant has surprisingly found that: with a specific amount of a specific element doped at the Li, Mn, P, and O sites of the compound LiMnPO₄, significantly improved rate performance can be obtained; the dissolution of Mn and doping elements at the Mn site is significantly reduced; significantly improved cycling performance and/or high-temperature stability is obtained; and the gram capacity and compacted density of the material can also be increased.

In some embodiments, M is Mg and/or Al. The doping of element Al in the first positive electrode active material can enhance the structural stability and thermal stability of the material and improve the cycling performance; the doping of element Mg in the first positive electrode active material leads to an increase or decrease in the valence state of transition metal ions, thereby generating holes or electrons, which alters the energy band structure of the material, improves the intrinsic electron conductivity of the material, and improves the cycling performance of the secondary battery; and the co-doping of Mg and Al into the lattice of the host material can synergistically stabilize the material structure, improve the cation mixing in the material, suppress the precipitation of oxygen, and further improve the cycling performance and thermal stability of the secondary battery.

Unless otherwise specified, in the chemical formula LiₐAₓMn_{1-y}B_{y}P_{1-z}C_{z}O₄₋ₙDₙ, when A is more than two elements, the foregoing limitation on the value range of y is not only a limitation on the stoichiometric number of each element as A but also a limitation on the sum of the stoichiometric numbers of each element as A. For example, when A is more than two elements A1, A2, ..., An, the stoichiometric numbers x1, x2, ..., xn of each of A1, A2, ..., An must fall within the value range defined by this application for x, and the sum of x1, x2, ..., xn must also fall within the value range. Similarly, under the condition that B, C, and D are more than two elements, the limitation on the value ranges of the stoichiometric numbers of B, C, and D in this application also has the foregoing meaning. Similarly, under the condition that M is more than two elements in the chemical formula LiNi_{b}Co_{d}MnₑM_{f}O₂, the limitation on the value range of the stoichiometric number of M in this application also have the foregoing meaning.

In some embodiments, the compounds LiNi_{b}Co_{d}MnₑM_{f}O₂ and LiₐAₓMn_{1-y}B_{y}P_{1-z}C_{z}O₄₋ₙDₙ both maintain electrically neutral.

In some embodiments, mass of the first positive electrode active material is m₁, mass of the second positive electrode active material is m₂, and the value of m₁/(m₁+m₂) is 2%-55% and optionally 3%-50%. Thus, the mass percentage of the first positive electrode active material in the two positive electrode active materials is within the foregoing range, which can improve the overall stability and safety of the positive electrode active material.

In some embodiments, the value of b×m₁/(m₁+m₂) is 0.017-0.457 and optionally 0.025-0.415. This can further improve the overall stability and safety of the positive electrode active material.

In some embodiments, the first positive electrode active material is a monocrystalline or quasi-monocrystalline material, and the particle size Dᵥ50 of the first positive electrode active material is less than or equal to 5.8 µm, optionally 2.3-5.8 µm, and more optionally 2.3-4.3 µm.

With the particle size of the monocrystalline or quasi-monocrystalline first positive electrode active material in the foregoing range, the electrochemical reaction area can be optimized, interfacial side reactions of the positive electrode during cycling of the secondary battery are further reduced and suppressed, the cycle decay rate of the secondary battery is reduced, and the cycle life of the secondary battery is extended.

In some embodiments, the first positive electrode active material is a monocrystalline or quasi-monocrystalline material, and BET specific surface area of the first positive electrode active material is less than or equal to 1.15 m²/g and optionally 0.45-1.15 m²/g; and/or
compacted density of the first positive electrode active material under 3T pressure is greater than or equal to 3.11 g/cm³ and optionally 3.11-3.4 g/cm³.

In some embodiments, when the first positive electrode active material is a monocrystalline or quasi-monocrystalline material, d is selected from the range of 0.05-0.320 and optionally the range of 0.05-0.282; and/or
b is greater than 0.314 and less than 0.97 and optionally selected from the range of 0.55-0.869.

When the first positive electrode active material is a monocrystalline or quasi-monocrystalline material, d and b being in the foregoing ranges is favorable for further improving the conductivity and rate performance of the positive electrode active material, further improving the cycling capacity retention rate of the secondary battery and further extending the cycle life of the secondary battery.

In some embodiments, when the first positive electrode active material is a polycrystalline material, the particle size of the first positive electrode active material is Dᵥ50 of 3.5-13.5 µm; and/or
BET specific surface area of the first positive electrode active material is less than or equal to 1.32 m2/g and optionally 0.28-1.32 m2/g; and/or
compacted density of the first positive electrode active material under 3T pressure is greater than or equal to 2.92 g/cm³ and optionally 2.92-3.31 g/cm³.

With the particle size, specific surface area, and compacted density of the polycrystalline first positive electrode active material within the foregoing ranges, the rate performance of the positive electrode active material can be further improved, interfacial side reactions of the positive electrode during cycling of the secondary battery are further reduced and suppressed, the cycle decay rate of the secondary battery is reduced, and the cycle life of the secondary battery is extended.

In some embodiments, the first positive electrode active material further includes lithium carbonate and/or lithium hydroxide;
optionally, based on mass of the first positive electrode active material, a mass percentage of the lithium carbonate is less than or equal to 1%, and/or a mass percentage of the lithium hydroxide is less than or equal to 1%.

Residual water molecules introduced by the second positive electrode active material may react with the electrolyte to generate HF. HF can easily cause damage to the positive electrode active material itself or the SEI film on the negative electrode plate, thereby affecting the lifespan of the secondary battery. The lithium carbonate and/or lithium hydroxide further included in the first positive electrode active material in this application can carry out neutralization reaction with HF, which reduces or suppress the destructive effect of HF on the positive electrode active material or the SEI film on the negative electrode plate, and thus further improves the cycle life of the secondary battery.

In some embodiments, in the second positive electrode active material, A is any one element selected from Zn, Al, Na, K, Mg, Nb, Mo, and W; B is at least two elements selected from Ti, V, Zr, Fe, Ni, Mg, Co, Ga, Sn, Sb, Nb, and Ge; C is any one element selected from B (boron), S, Si, and N; and D is any one element selected from S, F, Cl, and Br;
optionally, A is Mg or Nb, and/or
B is at least two elements selected from Fe, Ti, V, Co, and Mg, and more optionally is Fe and one or more elements selected from Ti, V, Co, and Mg, and/or
C is S, and/or
D is F.

With a doping element at the Li-site selected within the foregoing ranges, the lattice change rate during deintercalation of lithium can be further reduced, thereby further improving the rate performance of the secondary battery. With a doping element at the Mn-site selected within the foregoing ranges, the electron conductivity can be further improved and the lattice change rate can be further reduced, thereby improving the rate performance and gram capacity of the secondary battery. With a doping element at the P-site selected within the foregoing ranges, the rate performance of the secondary battery can be further improved. With a doping element at the O-site selected within the foregoing ranges, the interfacial side reactions can be further mitigated, and the high-temperature performance of the secondary battery can be improved.

In some embodiments, in the second positive electrode active material, x is selected from the range of 0.001-0.005; and/or
y is selected from the range of 0.01-0.5 and optionally the range of 0.25-0.5; and/or
z is selected from the range of 0.001-0.005; and/or
n is selected from the range of 0.001-0.005.

With a value of y selected within the foregoing range, the gram capacity and rate performance of the material can be further improved. With a value of x selected within the foregoing range, the kinetic performance of the material can be further improved. With a value of z selected within the foregoing range, the rate performance of the secondary battery can be further improved. With a value of n selected within the foregoing range, the high-temperature performance of the secondary battery can be further improved.

In some embodiments, a value of (1-y):y is selected from the range of 1-4 and optionally the range of 1.5-3, and a value of a:x is selected from the range of 9-1100 and optionally the range of 190-998. Thus, the energy density and cycling performance of the positive electrode active material can be further improved.

In some embodiments, the lattice change rate of the second positive electrode active material before and after complete deintercalation or intercalation of lithium is below 8% and optionally below 4%. The reduction of the lattice change rate enables the transport of Li ions easier; that is, Li ions have better migration capability in the material, which is conducive to improving the rate performance of the secondary battery. The lattice change rate can be measured by methods known in the art, for example, X-ray diffraction mapping (XRD).

In some embodiments, a Li/Mn antisite defect concentration of the second positive electrode active material is below 2% and optionally below 0.5%. The so-called Li/Mn antisite defect refers to the interchange of the Li⁺ and Mn²⁺ sites in LiMnPO₄ lattice. The Li/Mn antisite defect concentration refers to a percentage of Li⁺ interchanged with Mn²⁺ in the total amount of Li⁺ in the positive electrode active material. Antisite defects of Mn²⁺ hinders the Li⁺ transport. The reduction of the Li/Mn antisite defect concentration is conducive to improving the gram capacity and rate performance of the positive electrode active material. The Li/Mn antisite defect concentration may be measured by methods known in the art, such as XRD.

In some embodiments, a surface oxygen valence of the second positive electrode active material is lower than -1.82, and optionally is in the range of -1.89 to -1.98. The reduction of the surface oxygen valence of the positive electrode active material can mitigate the interfacial side reactions between the positive electrode active material and the electrolyte, thereby improving the cycling performance and high-temperature stability of the secondary battery. The surface oxygen valence can be measured by methods known in the art, such as electron energy loss spectroscopy (EELS).

In some embodiments, a compacted density of the second positive electrode active material under 3T is greater than 2.0 g/cm³ and optionally greater than 2.2 g/cm³. A higher compacted density indicates a large weight of the active material per unit volume. Therefore, increasing the compacted density is conducive to increasing the volumetric energy density of the cell. The compacted density can be measured according to GB/T 24533-2009.

In some embodiments, the second positive electrode active material further includes carbon, the carbon coating the surface of the compound LiₐAₓMn_{1-y}B_{y}P_{1-z}C_{z}O₄₋ₙDₙ. Thus, the conductivity of the positive electrode active material can be improved.

In some embodiments, b may, for example, be 0.4, 0.5, 0.6, 0.7, 0.8, or 0.9.

In some embodiments, d may, for example, be 0.05, 0.1, 0.15, 0.2, 0.25, or 0.3.

In some embodiments, e may be, for example, 0.01, 0.02, 0.05, 0.1, 0.15, 0.2, 0.26, 0.3, or 0.35.

### [Method for preparing positive electrode active material]

An embodiment of this application provides a method for preparing positive electrode active material, including the following steps:
providing a first positive electrode active material and a second positive electrode active material; and
mixing the first positive electrode active material and the second positive electrode active material; where
the first positive electrode active material includes a compound LiNi_{b}Co_{d}MnₑM_{f}O₂ and the second positive electrode active material includes a compound LiₐAₓMn_{1-y}B_{y}P_{1-z}C_{z}O₄₋ₙDₙ, where a, b, d, e, f, x, y, z, n, M, A, B, C, and D are defined as set forth in [Positive electrode active material];
optionally, the first positive electrode active material further includes lithium carbonate and/or lithium hydroxide; and
optionally, the second positive electrode active material further includes carbon coating the surface of the compound LiₐAₓMn_{1-y}B_{y}P_{1-z}C_{z}O₄₋ₙDₙ.

Thus, in this application, the first positive electrode active material is mixed with the second positive electrode active material, leveraging the complementary advantages of the two materials, so that the cycling capacity retention rate of the secondary battery is increased, the cycle life of the secondary battery is extended, and the safety of the secondary battery is improved.

In some embodiments, the first positive electrode active material is prepared by the following steps:
Step (1): reacting a Ni salt, a Co salt, an Mn salt, and a base with one another in a solvent, performing solid-liquid separation, and collecting a solid phase material; and
Step (2): mixing the solid phase material, a lithium source, and a source of element M, followed by ball milling, sintering, and cooling, to obtain a first positive electrode active material.

Optionally, in step (2), the first positive electrode active material cooled is pulverized and sifted, or the first positive electrode active material cooled is pulverized, sintered again, crushed, and sifted.

In some embodiments, in step (1), the reaction is carried out at a pH of 9-13 and optionally a pH of 9-12 or 10-13.

In some embodiments, in step (1), the reaction temperature is 40-80°C, for example, 50°C, 55°C, or 60°C.

In some embodiments, in step (1), the reaction time is 8-70 h, for example 20 h, 55 h, 60 h, or 65 h.

In some embodiments, in step (1), the reaction is carried out at a rotational speed of 150-1000 r/min, for example, 300 r/min or 500 r/min.

In some embodiments, in step (1), the solid-liquid separation is filtration.

In some embodiments, before step (2), the solid phase material is washed and dried; optionally vacuum dried at 100-140°C for 12-48 h, for example, vacuum dried at 120°C for 24 h.

In some embodiments, the rotational speed of the ball milling in step (2) is 200-500 r/s, for example, 300 r/s or 500 r/s.

In some embodiments, the ball milling time in step (2) is 1-5 h, for example, 2, 3, or 4 h.

In some embodiments, in step (2), the sintering is carried out in an air atmosphere; and optionally, the sintering is carried out in an air atmosphere of 0.1-0.4 MPa.

In some embodiments, in step (2), the sintering procedure is as follows: heating up to 750-950°C and holding the temperature for 12-20 h for pre-sintering, with a heating rate of 1°C/min; and optionally, then cooling down to 600°C at the same rate and holding the temperature for 8 h for sintering; and cooling down to 300°C at a rate of 1°C/min after sintering.

In some embodiments, the re-sintering procedure in step (2) is as follows: heating up to 400°C at a heating rate of 20°C/min and holding the temperature for 20 h for sintering; and cooling down to 300°C at a rate of 1°C/min after sintering.

In some implementations, in step (2), a jet mill is used for pulverizing; optionally, the jet mill has a rotational speed of 2500-3500 r/min, for example 3000 r/min; and optionally, the jet mill has an air volume of 400-600 m³/h, for example 500 m³/h.

In some embodiments, a 450-550 mesh (for example, 500-mesh) screen is used for sifting in step (2).

In some embodiments, the second positive electrode active material is prepared by the following steps:
Step (1): mixing a manganese source, a source of element B, an acid, and an optional solvent to obtain a mixture; and
step (2): mixing the mixture with a lithium source, a phosphorus source, a source of element A, a source of element C, a source of element D, an optional source of carbon, and an optional solvent, followed by drying and sintering, to obtain a core material including LiₘAₓMn_{1-y}B_{y}P_{1-z}C_{z}O₄₋ₙDₙ. A through D are defined as before.

In some embodiments, step (1) is performed at 60°C-120°C and optionally at 70°C-120°C (for example, about 60°C, about 70°C, about 80°C, about 90°C, about 100°C, about 110°C, or about 120°C); and/or, in step (1), the mixing is carried out by stirring at 200-800 rpm (for example, 200 rpm, 300 rpm, 400 rpm, 500 rpm, 600 rpm, 700 rpm, or 800 rpm) and optionally for 1-9 h (more optionally for 3-7 h, for example, about 2 h, about 3 h, about 4 h, about 5 h, about 6 h, about 7 h, about 8 h, or about 9 h).

In some embodiments, in step (2), the mixing is carried out for 8-15 h (for example, about 8 h, about 9 h, about 10 h, about 11 h, about 12 h, about 13 h, about 14 h, or about 15 h) and optionally at 20-120°C and optionally 40-120°C (for example, about 30°C, about 50°C, about 60°C, about 70°C, about 80°C, about 90°C, about 100°C, about 110°C, or about 120°C).

When the temperature and time during the preparation are within the foregoing ranges, the second positive electrode active material obtained from the preparation has fewer lattice defects, which is conducive to suppressing the dissolution of manganese and reducing the interfacial side reactions between the positive electrode active material and the electrolyte, thereby improving the cycling performance and safety performance of the secondary battery.

In some embodiments, in step (2), the mixing is carried out at a pH of 3.5-6, optionally a pH of 4-6, and more optionally a pH value of 4-5. It should be noted that the pH may be adjusted in this application by methods commonly used in the art, for example, by adding an acid or base.

In some embodiments, , optionally, a molar ratio of the mixture or element B-doped manganese salt particles to the lithium source and the phosphorus source in step (2) is 1:0.4-2.1:0.1-2.1, and optionally about 1:0.4-0.5:0.1-1.

In some embodiments, in step (2), the sintering is carried out at 600-900°C for 4-10 hours; optionally, the sintering may be carried out at about 650°C, about 700°C, about 750°C, about 800°C, about 850°C, or about 900°C for about 2 hours, about 3 hours, about 4 hours, about 5 hours, about 6 hours, about 7 hours, about 8 hours, about 9 hours, or about 10 hours; optionally, the sintering is carried out under protection of an inert gas or a mixed atmosphere of inert gas and hydrogen, and more optionally, the protective atmosphere is a gas mixture of 70-90% nitrogen and 10-30% hydrogen by volume. The sintering temperature and sintering time may be within any range defined by any of the foregoing values, which can improve the crystallinity, reduce the generation of impurity phases, and maintain a specific granularity, thereby improving the gram capacity and compacted density of the positive electrode active material and improving the overall performance of the secondary battery, including the rate performance.

In some optional embodiments, the mixture obtained in step (1) is filtered, dried, and milled to obtain manganese salt particles doped with element B having a particle size Dᵥ50 of 50-200 nm, and the manganese salt particles doped with element B are used to mix with a lithium source, a phosphorus source, a source of element A, a source of element C, and a source of element D, and an optional solvent, in step (2).

In some optional embodiments, in step (2), the drying is carried out by a spray drying device.

In some optional embodiments, in step (2), the mixing is accompanied by pulverizing.

The source of the material is not particularly limited in the preparation method in this application, and the source of an element may include one or more of elemental substance, sulfates, nitrates, phosphates, oxalates, carbonates, oxides, and hydroxides of the element, provided that the source can achieve the objectives of the preparation method in this application.

In some embodiments, the source of element A is one or more selected from elemental substance, oxides, phosphates, oxalates, carbonates, and sulfates of element A; and/or
the source of element B is one or more selected from elementary substance, oxides, phosphates, oxalates, carbonates, and sulfates of element B; and/or
the source of element C is one or more selected from sulfates, borates, nitrates, and silicates of element C; and/or
the source of element D is one or more selected from elementary substance and ammonium salts of element D.

In some embodiments, the source of element M is one or more selected from elemental substance, carbonates, sulfates, halides, nitrates, organic acid salts, oxides, and hydroxides of element M.

The amounts of elements A, B, C, D, and M added from the respective sources depend on a target doping amount, and the ratio of amounts of the lithium, manganese, and phosphorus sources conforms to the stoichiometric ratio.

In this application, the manganese source is a manganese-containing substance known in the art that can be used to prepare lithium manganese phosphate. In an example, the manganese source may be one or more selected from elemental manganese, manganese dioxide, manganese phosphate, manganese oxalate, and manganese carbonate.

In this application, the acid may be one or more selected from organic acids such as hydrochloric acid, sulfuric acid, nitric acid, phosphoric acid, silicic acid, metasilicic acid, and organic acids such as oxalic acid. In some embodiments, the acid is a dilute organic acid with a concentration of 60% or less by weight.

In this application, the lithium source may be a lithium-containing substance known in the art that can be used to prepare lithium manganese phosphate. In an example, the lithium source is one or more selected from lithium carbonate, lithium hydroxide, lithium phosphate, and lithium dihydrogen phosphate.

In this application, the phosphorus source may be a phosphorus-containing substance known in the art that can be used to prepare lithium manganese phosphate. In an example, the phosphorus source is one or more selected from diammonium hydrogen phosphate, diammonium dihydrogen phosphate, ammonium phosphate, and phosphoric acid.

In this application, in an example, the carbon source is one or more selected from starch, sucrose, glucose, polyvinyl alcohol, polyethylene glycol, and citric acid.

### [Positive electrode plate]

The positive electrode plate generally includes a positive electrode current collector and a positive electrode film layer provided on at least one surface of the positive electrode current collector, and the positive electrode film layer includes the foregoing positive electrode active material or a positive electrode active material prepared using the foregoing method.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode film layer may further optionally include a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. In an example, the negative electrode active material may include at least one of the following materials: artificial graphite, natural graphite, soft carbon, hard carbon, a silicon-based material, a tin-based material, and lithium titanate. The silicon-based material may be at least one selected from elemental silicon, silicon-oxygen compounds, silicon-carbon composites, silicon-nitrogen composites, and silicon alloys. The tin-based material may be selected from at least one of elemental tin, tin-oxygen compound, or tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer further optionally includes a binder. In an example, the binder may be selected from at least one of styrene butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. For example, the conductive agent may be at least one selected from superconducting carbon, acetylene black, carbon black, Ketjen black, carbon dots, carbon nanotubes, graphene, or carbon nanofibers.

In some embodiments, the negative electrode film layer may further optionally include other promoters such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is liquid and includes an electrolyte salt and a solvent.

In some embodiments, the electrolytic salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the electrolyte further optionally includes an additive. In an example, the additive may include a negative electrode film-forming additive and a positive electrode film-forming additive, or may include an additive that can improve some performance of the battery, for example, an additive for improving over-charge performance of the battery and an additive for improving high-temperature performance or low-temperature performance of the battery.

### [Separator]

In some embodiments, the secondary battery further includes a separator. The separator is not limited to any particular type in this application, and may be any well-known porous separator with good chemical stability and mechanical stability.

In some embodiments, material of the separator may be at least one selected from glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft package, for example, a soft pouch. Material of the soft pack may be plastic, which, for example, may be polypropylene, polybutylene terephthalate, and polybutylene succinate.

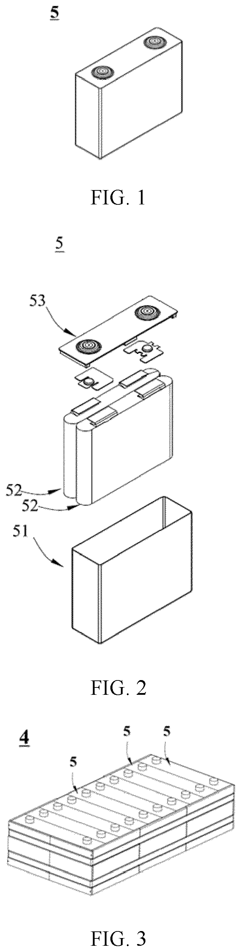

This application does not impose any special limitations on a shape of the secondary battery, and the secondary battery may be cylindrical, rectangular, or of any other shapes. For example, FIG. 1 shows a secondary battery 5 of a rectangular structure as an example.

In some embodiments, referring to FIG. 2, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to seal the accommodating cavity. The positive electrode plate, the negative electrode plate, and the separator may be made into an electrode assembly 52 through winding or lamination. The electrode assembly 52 is enclosed in the accommodating cavity. The electrolyte infiltrates into the electrode assembly 52. The secondary battery 5 may include one or more electrode assemblies 52, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

FIG. 3 shows a battery module 4 as an example. Referring to FIG. 3, in the battery module 4, a plurality of secondary batteries 5 may be sequentially arranged in a length direction of the battery module 4. Certainly, the batteries may alternatively be arranged in any other manners. Further, the plurality of secondary batteries 5 may be fastened by using fasteners.

Optionally, the battery module 4 may further include a housing with an accommodating space, and the plurality of secondary batteries 5 are accommodated in the accommodating space.

In some embodiments, the battery module may be further assembled into a battery pack, and the battery pack may include one or more battery modules. A specific quantity may be chosen by persons skilled in the art according to use and capacity of the battery pack.

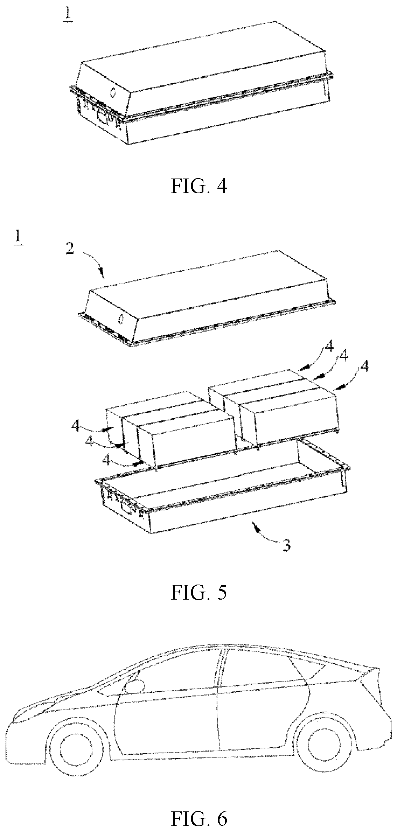

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 6 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

### [Examples]

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Preparation of first positive electrode active material

### Preparation of Example A3: LiNi_{0.55}Co_{0.113}Mn_{0.277}Al_{0.04}Mg_{0.02}O₂(monocrystalline-like)

(1) NiSO₄, CoSO₄, and MnSO₄ at a molar ratio of 0.55:0.113:0.277 were added with water to prepare a mixed solution, where the concentration of NiSO₄ in the mixed solution was 2 mol/L; and a 5 mol/L NaOH solution was prepared;
(2) 50 L of the mixed solution was passed into a reactor, and then 50 L of NaOH solution and an appropriate amount of 0.5 mol/L ammonia solution were passed into the reactor, so that the pH value in the reactor was 9.0-12.0 and the reaction temperature was 40-80°C. The reaction proceeded under stirring conditions for 60 h at a stirring speed of 300-1000 r/min. After completion of the reaction, the precipitate was filtered out and washed, and the washed precipitate was dried under vacuum at 120°C for 24 h to obtain a precursor; and
(3) Li₂CO₃, the precursor, Al₂O₃, and MgO were mixed, where the molar ratio of Li₂CO₃ (based on the molar amount of element Li), the precursor (based on the total molar amount of the three elements Ni, Co, and Mn in the mixed solution), Al₂O₃ (based on the molar amount of element Al), and MgO was 1.05:0.94:0.04:0.02. After mixing, a resulting mixture was placed in a ball milling tank for ball milling at 300 r/s for 2 h, then placed in a chamber furnace, where in a 0.2 MPa air atmosphere, the resulting mixture was heated up to 950°C at a heating rate of 1°C/min and held at that temperature for 12 h for pre-sintering, then cooled down to 600°C at a rate of 1°C and held at that temperature for 8 h for sintering, cooled down to 300°C at a rate of 1°C/min after sintering, and continued to be cooled down to room temperature naturally. Subsequently, a resulting material was pulverized using a jet mill at a rotational speed of 3000 r/min and with an air volume of 500 m³/h for 0.5 h, and then sifted through a 500-mesh screen to obtain the first positive electrode active material.

### Preparation example A16: LiNi_{0.83}Co_{0.114}Mn_{0.006}Al_{0.04}Mg_{0.01}O₂(polycrystalline)

(1) NiSO₄, CoSO₄, and MnSO₄ at a molar ratio of 0.83:0.114:0.006 were added with water to prepare a mixed solution, where the concentration of NiSO₄ in the mixed solution was 2 mol/L; and a 6 mol/L NaOH solution was prepared;
(2) 50 L of the mixed solution was passed into a reactor, and then 50 L of NaOH solution and an appropriate amount of 0.5 mol/L ammonia solution were passed into the reactor, so that the pH value in the reactor was 10-13 and the reaction temperature was 40-80°C. The reaction proceeded under stirring conditions for 8-20 h at a stirring speed of 150-300 r/min. After completion of the reaction, the precipitate was filtered out and washed, and the washed precipitate was dried under vacuum at 120°C for 24 h to obtain a precursor; and
(3) LiOH, the precursor, Al₂O₃, and MgO were mixed, where the molar ratio of LiOH, the precursor (based on the total molar amount of the three elements Ni, Co, and Mn in the mixed solution), Al₂O₃ (based on the molar amount of element Al), and MgO was 1.05:0.95:0.04:0.01. After mixing, a resulting mixture was placed in a ball milling tank for ball milling at 500 r/s for 2 h, then placed in a chamber furnace, where in a 0.2 MPa air atmosphere, the resulting mixture was heated up to 750°C at a heating rate of 20°C/min and held at that temperature for 20 h for pre-sintering, then cooled down to 300°C at a rate of 1°C/min after sintering, and continued to be cooled down to room temperature naturally. The resulting material was crushed at a rotational speed of 2000 r/min for 5 h, then heated to a temperature of 400°C at a heating rate of 20°C/min and held at that temperature for 20 h for sintering, cooled down to 300°C at a rate of 1°C/min after sintering, and continued to be cooled down to room temperature naturally. Subsequently, the resulting material was crushed using a jet mill at a rotational speed of 3000 r/min and with an air volume of 500 m³/h for 0.5 h, and then sifted through a 400-mesh screen to obtain the first positive electrode active material.

### Preparation examples A1, A2, A4 to A15, A17 to A22 and Comparative preparation example A1

The first positive electrode active materials of Preparation examplesA1, A2, A4 to A11, A22, and Comparative preparation example A1 were prepared using a method similar to that in Preparation example A3, with differences in the preparation as indicated in Table 1 and the rest being the same as those in Preparation example A3.

Preparation examples A12 to A15 and A17 to A21 were prepared using a method similar to that in Preparation example A16, with differences in the preparation as indicated in Table 1 and the rest being the same as those in Preparation example A16.

**Table 1 Preparation of first positive electrode active material**

| No. | First positive electrode active material | Crystal type | Raw materials in step (1) | Step (2) | Raw materials and parameters in step (3) |
|---|---|---|---|---|---|
| Preparation example A1 | LiNi_{0.562}Co_{0.115}Mn_{0.283} Al_{0.04}O₂ | Monocrystalline-like | NiSO₄, CoSO₄, and MnSO₄ at a molar ratio of 0.562:0.115:0.283 for preparing a mixed solution, where the concentration of NiSO₄ was 2 mol/L, and a 5 mol/L NaOH solution | Same as Preparation example A3 | Li₂CO₃ (based on the molar amount of element Li), the precursor (based on the total molar amount of the three elements Ni, Co, and Mn in the mixed solution), and Al₂O₃ (based on the molar amount of element aluminum), mixed at a molar ratio of 1.05:0.96:0.04 |
| Preparation example A2 | LiNi_{0.573}Co_{0.118}Mn_{0.289} Mg_{0.02}O₂ | Monocrystalline-like | NiSO₄, CoSO₄, and MnSO₄ at a molar ratio of 0.573:0.118:0.2893 for preparing a mixed solution, where the concentration of NiSO₄ was 2 mol/L, and a 5 mol/L NaOH solution | Same as Preparation example A3 | Li₂CO₃ (based on the molar amount of element Li), the precursor (based on the total molar amount of the three elements Ni, Co, and Mn in the mixed solution), and MgO (based on the molar amount of element Mg), mixed at a molar ratio of 1.05:0.98:0.02 |
| Preparation example A3 | LiNi_{0.55}Co_{0.113}Mn_{0.277} Al_{0.04}Mg_{0.02}O₂ | Monocrystalline-like | NiSO₄, CoSO₄, and MnSO₄ at a molar ratio of 0.55:0.113:0.277 for preparing a mixed solution, where the concentration of NiSO₄ was 2 mol/L, and a 5 mol/L NaOH solution | Same as Preparation example A3 | Li₂CO₃ (based on the molar amount of element Li), the precursor (based on the total molar amount of the three elements Ni, Co, and Mn in the mixed solution), Al₂O₃ (based on the molar amount of element Al), and MgO, mixed at a molar ratio of 1.05:0.94:0.04:0.02 |
| Preparation example A4 | LiNi_{0.55}Co_{0.047}Mn_{0.343} Al_{0.04}Mg_{0.02}O₂ | Monocrystalline-like | NiSO₄, CoSO₄, and MnSO₄ at a molar ratio of 0.55:0.047:0.343 for preparing a mixed solution, where the concentration of NiSO₄ was 2 mol/L, and a 5 mol/L NaOH solution | Same as Preparation example A3 | Li₂CO₃ (based on the molar amount of element Li), the precursor (based on the total molar amount of the three elements Ni, Co, and Mn in the mixed solution), Al₂O₃ (based on the molar amount of element Al), and MgO, mixed at a molar ratio of 1.05:0.94:0.04:0.02 |
| Preparation example A5 | LiNi_{0.55}Co_{0.141}Mn_{0.249} Al_{0.04}Mg_{0.02}O₂ | Monocrystalline-like | NiSO₄, CoSO₄, and MnSO₄ at a molar ratio of 0.55:0.141:0.249 for preparing a mixed solution, where the concentration of NiSO₄ was 2 mol/L, and a 5 mol/L NaOH solution | Same as Preparation example A3 | Li₂CO₃ (based on the molar amount of element Li), the precursor (based on the total molar amount of the three elements Ni, Co, and Mn in the mixed solution), Al₂O₃ (based on the molar amount of element Al), and MgO, mixed at a molar ratio of 1.05:0.94:0.04:0.02 |
| Preparation example A6 | LiNi_{0.55}Co_{0.113}Mn_{0.277} Al_{0.04}Mg_{0.02}O₂ | Monocrystalline-like | NiSO₄, CoSO₄, and MnSO₄ at a molar ratio of 0.55:0.113:0.277 for preparing a mixed solution, where the concentration of NiSO₄ was 2 mol/L, and a 5 mol/L NaOH solution | Making the pH value in the reactor be 8-9, with the rest being the same as those in Preparation example A3 | Li₂CO₃ (based on the molar amount of element Li), the precursor (based on the total molar amount of the three elements Ni, Co, and Mn in the mixed solution), Al₂O₃ (based on the molar amount of element Al), and MgO, mixed at a molar ratio of 1.05:0.94:0.04:0.02 |
| Preparation example A7 | LiNi_{0.55}Co_{0.235}Mn_{0.155} Al_{0.04}Mg_{0.02}O₂ | Monocrystalline-like | NiSO₄, CoSO₄, and MnSO₄ at a molar ratio of 0.55:0.235:0.155 for preparing a mixed solution, where the concentration of NiSO₄ was 2 mol/L, and a 5 mol/L NaOH solution | Same as Preparation example A3 | Li₂CO₃ (based on the molar amount of element Li), the precursor (based on the total molar amount of the three elements Ni, Co, and Mn in the mixed solution), Al₂O₃ (based on the molar amount of element Al), and MgO, mixed at a molar ratio of 1.05:0.94:0.04:0.02 |
| Preparation example A8 | LiNi_{0.55}Mn_{0.39}Al_{0.04}M g_{0.02}O₂ | Monocrystalline-like | NiSO₄ and MnSO₄ at a molar ratio of 0.55:0.39 for preparing a mixed solution, where the concentration of NiSO₄ was 2 mol/L, and a 5 mol/L NaOH solution | Same as Preparation example A3 | Li₂CO₃ (based on the molar amount of element Li), the precursor (based on the total molar amount of the elements Ni and Mn in the mixed solution), Al₂O₃ (based on the molar amount of element Al), and MgO, mixed at a molar ratio of 1.05:0.94:0.04:0.02 |
| Preparation example A9 | LiNi_{0.314}Co_{0.313}Mn_{0.313} Al_{0.04}Mg_{0.02}O₂ | Monocrystalline-like | NiSO₄, CoSO₄, and MnSO₄ at a molar ratio of 0.314:0.313:0.313 for preparing a mixed solution, where the concentration of NiSO₄ was 2 mol/L, and a 5 mol/L NaOH solution | Same as Preparation example A3 | Li₂CO₃ (based on the molar amount of element Li), the precursor (based on the total molar amount of the three elements Ni, Co, and Mn in the mixed solution), Al₂O₃ (based on the molar amount of element Al), and MgO, mixed at a molar ratio of 1.05:0.94:0.04:0.02 |
| Preparation example A10 | LiNio_{0.869}Co_{0.048}Mn_{0.033} Al_{0.04}Mg_{0.01}O₂ | Monocrystalline-like | NiSO₄, CoSO₄, and MnSO₄ at a molar ratio of 0.869:0.048:0.033 for preparing a mixed solution, where the concentration of NiSO₄ was 2 mol/L, and a 6 mol/L NaOH solution | Same as Preparation example A3 | LiOH, the precursor (based on the total molar amount of the three elements Ni, Co, and Mn in the mixed solution), Al₂O₃ (based on the molar amount of element Al), and MgO, mixed at a molar ratio of 1.05:0.95:0.04:0.01 |
| Preparation example A11 | LiNi_{0.97}Co_{0.005}Mn_{0.01} Al_{0.005}Mg_{0.01}O₂ | Monocrystalline-like | NiSO₄, CoSO₄, and MnSO₄ at a molar ratio of 0.97:0.005:0.01 for preparing a mixed solution, where the concentration of NiSO₄ was 2 mol/L, and a 6 mol/L NaOH solution | Same as Preparation example A3 | LiOH, the precursor (based on the total molar amount of the three elements Ni, Co, and Mn in the mixed solution), Al₂O₃ (based on the molar amount of element aluminum), and MgO, mixed at a molar ratio of 1.05:0.985:0.005:0.01 |
| Preparation example A12 | LiNi_{0.34}Co_{0.32}Mn_{0.28}Al _{0.04}Mg_{0.02}O₂ | Polycrystalline | NiSO₄, CoSO₄, and MnSO₄ at a molar ratio of 0.34:0.32:0.28 for preparing a mixed solution, where the concentration of NiSO₄ was 2 mol/L, and a 6 mol/L NaOH solution | Making the pH value in the reactor be 9.5; reacting under stirring conditions for 3 h; with the rest being the same as those in Preparation example A16 | Li₂CO₃ (based on the molar amount of element Li), the precursor (based on the total molar amount of the three elements Ni, Co, and Mn in the mixed solution), Al₂O₃ (based on the molar amount of element Al), and MgO, mixed at a molar ratio of 1.05:0.94:0.04:0.02; and 10 h for second sintering |
| Preparation example A13 | LiNi_{0.5}Co_{0.282}Mn_{0.158} Al_{0.04}Mg_{0.02}O₂ | Polycrystalline | NiSO₄, CoSO₄, and MnSO₄ at a molar ratio of 0.5:0.282:0.158 for preparing a mixed solution, where the concentration of NiSO₄ was 2 mol/L, and a 6 mol/L NaOH solution | Making the pH value in the reactor be 9; reacting under stirring conditions for 3.5 h; with the rest being the same as those in Preparation example A16 | Li₂CO₃ (based on the molar amount of element Li), the precursor (based on the total molar amount of the three elements Ni, Co, and Mn in the mixed solution), Al₂O₃ (based on the molar amount of element Al), and MgO, mixed at a molar ratio of 1.05:0.94:0.04:0.02; and 12 h for second sintering |
| Preparation example A14 | LiNi_{0.65}Co_{0.188}Mn_{0.102} Al_{0.04}Mg_{0.02}O₂ | Polycrystalline | NiSO₄, CoSO₄, and MnSO₄ at a molar ratio of 0.65:0.188:0.102 for preparing a mixed solution, where the concentration of NiSO₄ was 2 mol/L, and a 6 mol/L NaOH solution | Making the pH value in the reactor be 9.0; reacting under stirring conditions for 4 h; with the rest being the same as those in Preparation example A16 | Li₂CO₃ (based on the molar amount of element Li), the precursor (based on the total molar amount of the three elements Ni, Co, and Mn in the mixed solution), Al₂O₃ (based on the molar amount of element Al), and MgO, mixed at a molar ratio of 1.05:0.94:0.04:0.02; and 15 h for second sintering |
| Preparation example A15 | LiNi_{0.65}Co_{0.188}Mn_{0.102} Al_{0.04}Mg_{0.02}O₂ | Polycrystalline | NiSO₄, CoSO₄, and MnSO₄ at a molar ratio of 0.65:0.188:0.102 for preparing a mixed solution, where the concentration of NiSO₄ was 2 mol/L, and a 6 mol/L NaOH solution | Same as Preparation example A16 | Li₂CO₃ (based on the molar amount of element Li), the precursor (based on the total molar amount of the three elements Ni, Co, and Mn in the mixed solution), Al₂O₃ (based on the molar amount of element Al), and MgO, mixed at a molar ratio of 1.05:0.94:0.04:0.02 |
| Preparation example A16 | LiNi_{0.83}Co_{0.114}Mn_{0.006} Al_{0.04}Mg_{0.01}O₂ | Polycrystalline | NiSO₄, CoSO₄, and MnSO₄ at a molar ratio of 0.83:0.114:0.006 for preparing a mixed solution, where the concentration of NiSO₄ was 2 mol/L, and a 6 mol/L NaOH solution | Same as Preparation example A16 | LiOH, the precursor (based on the total molar amount of the three elements Ni, Co, and Mn in the mixed solution), Al₂O₃ (based on the molar amount of element Al), and MgO, mixed at a molar ratio of 1.05:0.95:0.04:0.01 |
| Preparation example A17 | LiNi_{0.97}Co_{0.005}Mn_{0.01} Al_{0.005}Mg_{0.01}O₂ | Polycrystalline | NiSO₄, CoSO₄, and MnSO₄ at a molar ratio of 0.97:0.005:0.01 for preparing a mixed solution, where the concentration of NiSO₄ was 2 mol/L, and a 6 mol/L NaOH solution | Same as Preparation example A16 | LiOH, the precursor (based on the total molar amount of the three elements Ni, Co, and Mn in the mixed solution), Al₂O₃ (based on the molar amount of element Al), and MgO, mixed at a molar ratio of 1.05:0.985:0.005:0.01 |
| Preparation example A18 | LiNi_{0.83}Co_{0.114}Mn_{0.006} Al_{0.04}Mg_{0.01}O₂ | Polycrystalline | NiSO₄, CoSO₄, and MnSO₄ at a molar ratio of 0.83:0.114:0.006 for preparing a mixed solution, where the concentration of NiSO₄ was 2 mol/L, and a 6 mol/L NaOH solution | Same as Preparation example A16 | LiOH, the precursor (based on the total molar amount of the three elements Ni, Co, and Mn in the mixed solution), Al₂O₃ (based on the molar amount of element Al), and MgO, mixed at a molar ratio of 1.05:0.95:0.04:0.01; and 25 h for second sintering |
| Preparation example A19 | LiNi_{0.83}Co_{0.095}Mn_{0.025} Al_{0.04}Mg_{0.01}O₂ | Polycrystalline | NiSO₄, CoSO₄, and MnSO₄ at a molar ratio of 0.83:0.095:0.025 for preparing a mixed solution, where the concentration of NiSO₄ was 2 mol/L, and a 6 mol/L NaOH solution | Same as Preparation example A16 | LiOH, Li₂CO₃ (based on the molar amount of element Li), the precursor (based on the total molar amount of the three elements Ni, Co, and Mn in the mixed solution), Al₂O₃ (based on the molar amount of element Al), and MgO, mixed at a molar ratio of 0.3:0.8:0.95:0.04:0.01 |
| Preparation example A20 | LiNi_{0.83}Co_{0.095}Mn_{0.025} Al_{0.04}Mg_{0.01}O₂ | Polycrystalline | NiSO₄, CoSO₄, and MnSO₄ at a molar ratio of 0.83:0.095:0.025 for preparing a mixed solution, where the concentration of NiSO₄ was 2 mol/L, and a 6 mol/L NaOH solution | Same as Preparation example A16 | LiOH, Li₂CO₃ (based on the molar amount of element Li), the precursor (based on the total molar amount of the three elements Ni, Co, and Mn in the mixed solution), Al₂O₃ (based on the molar amount of element Al), and MgO, mixed at a molar ratio of 0.65:0.45:0.95:0.04:0.01 |
| Preparation example A21 | LiNi_{0.83}Co_{0.095}Mn_{0.025} Al_{0.04}Mg_{0.01}O₂ | Polycrystalline | NiSO₄, CoSO₄, and MnSO₄ at a molar ratio of 0.83:0.095:0.025 for preparing a mixed solution, where the concentration of NiSO₄ was 2 mol/L, and a 6 mol/L NaOH solution | Same as Preparation example A16 | LiOH, Li₂CO₃ (based on the molar amount of element Li), the precursor (based on the total molar amount of the three elements Ni, Co, and Mn in the mixed solution), Al₂O₃ (based on the molar amount of element Al), and MgO, mixed at a molar ratio of 0.6:0.6:0.95:0.04:0.01 |
| Preparation example A22 | LiNi_{0.869}Co_{0.048}Mn_{0.033} Al_{0.04}Mg_{0.01}O₂ | Monocrystalline-like | NiSO₄, CoSO₄, and MnSO₄ at a molar ratio of 0.869:0.048:0.033 for preparing a mixed solution, where the concentration of NiSO₄ was 2 mol/L, and a 6 mol/L NaOH solution | Same as Preparation example A3 | LiOH, Li₂CO₃ (based on the molar amount of element Li), the precursor (based on the total molar amount of the three elements Ni, Co, and Mn in the mixed solution), Al₂O₃ (based on the molar amount of element Al), and MgO, mixed at a molar ratio of 0.6:0.6:0.95:0.04:0.01 |
| Comparative preparation example A1 | LiNi_{0.585}Co_{0.12}Mn_{0.295} O₂ | Monocrystalline-like | NiSO₄, CoSO₄, and MnSO₄ at a molar ratio of 0.585:0.12:0.295 for preparing a mixed solution, where the concentration of NiSO₄ was 2 mol/L, and a 5 mol/L NaOH solution | Same as Preparation example A3 | Li₂CO₃ (based on the molar amount of element Li) and the precursor (based on the total molar amount of the three elements Ni, Co, and Mn in the mixed solution), mixed at a molar ratio of 1.05: 1 |

### Preparation of second positive electrode active material

### Preparation example B1

Preparation of doped manganese oxalate: 1.3 mol of MnSO₄·H₂O and 0.7 mol of FeSO₄·H₂O were thoroughly mixed in a mixer for 6 hours; and a resulting mixture was transferred to a reactor, with the addition of 10 L of deionized water and 2 mol of oxalic acid dihydrate, and heated to 80°C. Then stirring was carried out at 600 rpm for 6 hours until the reaction was terminated (no air bubbles were generated), and a Fe-doped manganese oxalate suspension was obtained. The suspension was then filtered and a resulting filter cake was dried at 120°C and then ground to obtain Fe doped manganese oxalate particles with a median particle size Dᵥ50 of about 100 nm.

Preparation of doped lithium manganese phosphate: 1 mol of Fe doped manganese oxalate particles, 0.497 mol of lithium carbonate, 0.001 mol of Mo(SO₄)₃, an aqueous phosphoric acid solution with a concentration of 85% and containing 0.999 mol of phosphoric acid, 0.001 mol of H₄SiO₄, 0.0005 mol of NH₄HF₂ and 0.005 mol of sucrose were added to 20 L of deionized water, and a resulting mixture was transferred to a sand mill and fully ground and stirred for 10 hours to obtain a slurry; the slurry was transferred to a spray drying apparatus for spray drying and granulation, with the drying temperature set to 250°C and the drying time to 4 hours, and particles were obtained; and the particles were sintered at 700 °C for 10 h in a protective atmosphere of nitrogen (90% v/v) + hydrogen (10% v/v) to obtain a second positive electrode active material, carbon-coated Li_{0.994}Mo_{0.001}Mn_{0.65}Fe_{0.35}P_{0.999}Si_{0.001}O_{3.999}F_{0.001}. The element contents of the positive electrode active material can be examined using inductively coupled plasma emission spectrometry (ICP).

### Preparation example B2

Same as Preparation example B1 except that the amount of high purity Li₂CO₃ was changed to 0.4885 mol, Mo(SO₄)₃ was replaced with an equal molar amount of MgSO₄, the amount of FeSO₄·H₂O was changed to 0.68 mol, 0.02 mol of Ti(SO₄)₂ was added in preparation of the doped manganese oxalate, and H₄SiO₄ was replaced with an equal molar amount of HNO₃.

### Preparation example B3

Same as Preparation example B 1 except that the amount of high purity Li₂CO₃ was changed to 0.496 mol, Mo(SO₄)₃ was replaced with an equal molar amount of W(SO₄)₃, and H₄SiO₄ was replaced with an equal molar amount of H₂SO₄.

### Preparation example B4

Same as Preparation example B 1 except that the amount of high purity Li₂CO₃ was changed to 0.4985 mol, 0.001 mol of Mo(SO₄)₃ was replaced with 0.0005 mol of Al₂(SO₄)₃, and NH₄HF₂ was replaced with an equal molar amount of NH₄HCl₂.

### Preparation example B5

Same as Preparation example B 1 except that 0.7 mol of FeSO₄·H₂O was changed to 0.69 mol, 0.01 mol of VCl₂ was added in the preparation of the doped manganese oxalate, the amount of Li₂CO₃ was changed to 0.4965 mol, 0.001 mol of Mo(SO₄)₃ was replaced with 0.0005 mol of Nb₂(SO₄)₅, and H₄SiO₄ was replaced with an equal molar amount of H₂SO₄.

### Preparation example B6

Same as Preparation example B 1 except that the amount of FeSO₄·H₂O was changed to 0.68 mol, 0.01 mol of VCl₂ was added in the preparation of the doped manganese oxalate, the amount of Li₂CO₃ was changed to 0.4965 mol, 0.001 mol of Mo(SO₄)₃ was replaced with 0.0005 mol of Nb₂(SO₄)₅, and H₄SiO₄ was replaced with an equal molar amount of H₂SO₄.

### Preparation example B7

Same as Preparation example B6 except that MgSO₄ was replaced with an equal molar amount of CoSO₄.

### Preparation example B8

Same as Preparation example B6 except that MgSO₄ was replaced with an equal molar amount of NiSO₄.

### Preparation example B9

Same as Preparation example B 1 except that the amount of FeSO₄·H₂O was changed to 0.698 mol, 0.002 mol of Ti(SO₄)₂ was added in the preparation of the doped manganese oxalate, the amount of Li₂CO₃ was changed to 0.4955 mol, 0.001 mol of Mo(SO₄)₃ was replaced with 0.0005 mol of Nb₂(SO₄)₅, H₄SiO₄ was replaced with an equal molar amount of H₂SO₄, and NH₄HF₂ was replaced with an equal molar amount of NH₄HCl₂.

### Preparation example B10

Same as Preparation example B1 except that the amount of FeSO₄·H₂O was changed to 0.68 mol, 0.01 mol of VCl₂ and 0.01 mol of MgSO₄ were added in the preparation of the doped manganese oxalate, the amount of Li₂CO₃ was changed to 0.4975 mol, 0.001 mol of Mo(SO₄)₃ was replaced with 0.0005 mol of Nb₂(SO₄)₅, and NH₄HF₂ was replaced with an equal molar amount of NH₄HBr₂.

### Preparation example B11

Same as Preparation example B1 except that the amount of FeSO₄·H₂O was changed to 0.69 mol, 0.01 mol of VCl₂ was added in the preparation of the doped manganese oxalate, the amount of Li₂CO₃ was changed to 0.499 mol, Mo(SO₄)₃ was replaced with an equal molar amount of MgSO₄, and NH₄HF₂ was replaced with an equal molar amount of NH₄HBr₂.

### Preparation example B12

Same as Preparation example B1 except that the amount of MnSO₄·H₂O was changed to 1.36 mol, the amount of FeSO₄·H₂O was changed to 0.6 mol, 0.04 mol of VCl₂ was added in the preparation of the doped manganese oxalate, the amount of Li₂CO₃ was changed to 0.4985 mol, Mo(SO₄)₃ was replaced with an equal molar amount of MgSO₄, and H₄SiO₄ was replaced with an equal molar amount of HNO₃.

### Preparation example B13

Same as Preparation example B12 except that the amount of MnSO₄·H₂O was changed to 1.16 mol and the amount of FeSO₄·H₂O was changed to 0.8 mol.

### Preparation example B14

Same as Preparation example B12 except that the amount of MnSO₄·H₂O was changed to 1.3 mol and the amount of VCl₂ was changed to 0.1 mol.

### Preparation example B15

Same as Preparation example B1 except that the amount of MnSO₄·H₂O was changed to 1.2 mol, 0.1 mol of VCl₂ was added in the preparation of the doped manganese oxalate, the amount of Li₂CO₃ was changed to 0.494 mol, 0.001 mol of Mo(SO₄)₃ was replaced with 0.005 mol of MgSO₄, and H₄SiO₄ was replaced with an equal molar amount of H₂SO₄.

### Preparation example B16

Same as Preparation example B1 except that the amount of MnSO₄·H₂O was changed to 1.2 mol, 0.1 mol of VCl₂ was added in the preparation of the doped manganese oxalate, the amount of Li₂CO₃ was changed to 0.467 mol, 0.001 mol of Mo(SO₄)₃ was replaced with 0.005 mol of MgSO₄, 0.001 mol of H₄SiO₄ was replaced with 0.005 mol of H₂SO₄, and 1.175 mol of phosphoric acid with a concentration of 85% was replaced with 1.171 mol of phosphoric acid with a concentration of 85%.

### Preparation example B17

Same as Preparation example B1 except that the amount of MnSO₄·H₂O was changed to 1.2 mol, 0.1 mol of VCl₂ was added in the preparation of the doped manganese oxalate, the amount of Li₂CO₃ was changed to 0.492 mol, 0.001 mol of Mo(SO₄)₃ was replaced with 0.005 mol of MgSO₄, H₄SiO₄ was replaced with an equal molar amount of H₂SO₄, and 0.0005 mol of NH₄HF₂ was changed to 0.0025 mol.

### Preparation example B18

Same as Preparation example B1 except that the amount of FeSO₄·H₂O was changed to 0.5 mol, 0.1 mol of VCl₂ and 0.1 mol of CoSO₄ were added in the preparation of the doped manganese oxalate, the amount of Li₂CO₃ was changed to 0.492 mol, 0.001 mol of Mo(SO₄)₃ was replaced with 0.005 mol of MgSO₄, H₄SiO₄ was replaced with an equal molar amount of H₂SO₄, and 0.0005 mol of NH₄HF₂ was changed to 0.0025 mol.

### Preparation example B19

Same as Preparation example B18 except that the amount of FeSO₄·H₂O was changed to 0.4 mol and 0.1 mol of CoSO₄ was changed to 0.2 mol.

### Preparation example B20

Same as Preparation example B18 except that the amount of MnSO₄·H₂O was changed to 1.5 mol, the amount of FeSO₄·H₂O was changed to 0.1 mol, and the amount of CoSO₄ was changed to 0.3 mol.

### Preparation example B21

Same as Preparation example B18 except that 0.1 mol of CoSO₄ was replaced with 0.1 mol of NiSO₄.

### Preparation example B22

Same as Preparation example B18 except that the amount of MnSO₄·H₂O was changed to 1.5 mol, the amount of FeSO₄·H₂O was changed to 0.2 mol, and 0.1 mol of CoSO₄ was replaced with 0.2 mol of NiSO₄.

### Preparation example B23

Same as Preparation example B18 except that the amount of MnSO₄·H₂O was changed to 1.4 mol, the amount of FeSO₄·H₂O was changed to 0.3 mol, and the amount of CoSO₄ was changed to 0.2 mol.

### Preparation example B24

Same as Preparation example B1 except that 1.3 mol of MnSO₄·H₂O was changed to 1.2 mol, 0.7 mol of FeSO₄·H₂O was changed to 0.5 mol, 0.1 mol of VCl₂ and 0.2 mol of CoSO₄ were added in the preparation of the doped manganese oxalate, the amount of Li₂CO₃ was changed to 0.497 mol, 0.001 mol of Mo(SO₄)₃ was replaced with 0.005 mol of MgSO₄, H₄SiO₄ was replaced with an equal molar amount of H₂SO₄, and 0.0005 mol of NH₄HF₂ was changed to 0.0025 mol.

### Preparation example B25

Same as Preparation example B18 except that the amount of MnSO₄·H₂O was changed to 1.0 mol, the amount of FeSO₄·H₂O was changed to 0.7 mol, and the amount of CoSO₄ was changed to 0.2 mol.

### Preparation example B26

Same as Preparation example B1 except that the amount of MnSO₄·H₂O was changed to 1.4 mol, the amount of FeSO₄·H₂O was changed to 0.3 mol, 0.1 mol of VCl₂ and 0.2 mol of CoSO₄ were added in the preparation of the doped manganese oxalate, the amount of Li₂CO₃ was changed to 0.4825 mol, 0.001 mol of Mo(SO₄)₃ was replaced with 0.005 mol of MgSO₄, the amount of H₄SiO₄ was changed to 0.1 mol, the amount of phosphoric acid was changed to 0.9 mol, and the amount of NH₄HF₂ was changed to 0.4 mol.

### Preparation example B27

Same as Preparation example B1 except that the amount of MnSO₄·H₂O was changed to 1.4 mol, the amount of FeSO₄·H₂O was changed to 0.3 mol, 0.1 mol of VCl₂ and 0.2 mol of CoSO₄ were added in the preparation of the doped manganese oxalate, the amount of Li₂CO₃ was changed to 0.485 mol, 0.001 mol of Mo(SO₄)₃ was replaced with 0.005 mol of MgSO₄, the amount of H₄SiO₄ was changed to 0.08 mol, the amount of phosphoric acid was changed to 0.92 mol, and the amount of NH₄HF₂ was changed to 0.05 mol.

### Preparation examples B28-B41

The positive electrode active materials were prepared in the same manner as in Preparation example B 1, but the stirring speed and temperature in the preparation of the doped manganese oxalate, time for grinding and stirring in the sand mill, sintering temperature, and sintering time were changed, with details as shown in Table 2 below.

**Table 2 Stirring speed and temperature in the preparation of the doped manganese oxalate, time of grinding and stirring in the sand mill, sintering temperature, and sintering time in Preparation examples B28-B41**

| | Stirring speed (rpm) | Stirring temperature (°C) | Grinding time (h) | Sintering temperature (°C) | Sintering time (h) |
|---|---|---|---|---|---|
| Preparation example B28 | 200 | 50 | 12 | 700 | 10 |
| Preparation example B29 | 300 | 50 | 12 | 700 | 10 |
| Preparation example B30 | 400 | 50 | 12 | 700 | 10 |
| Preparation example B31 | 500 | 50 | 12 | 700 | 10 |
| Preparation example B32 | 600 | 50 | 10 | 700 | 10 |
| Preparation example B33 | 700 | 50 | 11 | 700 | 10 |
| Preparation example B34 | 800 | 50 | 12 | 700 | 10 |
| Preparation example B35 | 600 | 60 | 12 | 700 | 10 |
| Preparation example B36 | 600 | 70 | 12 | 700 | 10 |
| Preparation example B37 | 600 | 80 | 12 | 700 | 10 |
| Preparation example B38 | 600 | 90 | 12 | 600 | 10 |
| Preparation example B39 | 600 | 100 | 12 | 800 | 10 |
| Preparation example B40 | 600 | 110 | 12 | 700 | 8 |
| Preparation example B41 | 600 | 120 | 12 | 700 | 12 |

### Preparation examples B42-B54

The positive electrode active materials were prepared in the same manner as in Preparation example B 1, but the lithium source, manganese source, phosphorus source, and sources of doping elements A, B, C, and D were changed, with details as shown in Table 3 below. Compositions of the positive electrode active material prepared were the same as those of Preparation example B1, which means that both were Li_{0.994}Mo_{0.001}Mn_{0.65}Fe_{0.35}P_{0.999}Si_{0.001}O_{3.999}F_{0.001}.

**Table 3 Lithium source, manganese source, phosphorus source, and sources of doping elements A, B, C, and D in Preparation examples B42-B54**

| | Lithium source | Manganese source | Phosphorus source | A source | B source | C source | D source |
|---|---|---|---|---|---|---|---|
| Preparation example B42 | LiOH | MnCO₃ | NH₄H₂PO₄ | Mo(NO₃)₆ | FeO | H₄SiO₄ | NH₄F |
| Preparation example B43 | LiOH | MnO | NH₄H₂PO₄ | Mo(NO₃)₆ | FeO | H₄SiO₄ | NH₄F |
| Preparation example B44 | LiOH | Mn₃O₄ | NH₄H₂PO₄ | Mo(NO₃)₆ | FeO | H₄SiO₄ | NH₄F |
| Preparation example B45 | LiOH | Mn(NO₃)₂ | NH₄H₂PO₄ | Mo(NO₃)₆ | FeO | H₄SiO₄ | NH₄F |
| Preparation example B46 | LiOH | MnO | NH₄H₂PO₄ | Mo(NO₃)₆ | FeCOs | H₄SiO₄ | NH₄F |
| Preparation example B47 | LiOH | MnO | NH₄H₂PO₄ | Mo(NO₃)₆ | Fe(NO₃)₂ | H₄SiO₄ | NH₄F |
| Preparation example B48 | LiOH | MnO | NH₄H₂PO₄ | Mo(NO₃)₆ | Fe₃O₄ | H₄SiO₄ | NH₄F |
| Preparation example B49 | LiOH | MnO | NH₄H₂PO₄ | Mo(NO₃)₆ | FeC₂O₄ | H₄SiO₄ | NH₄F |
| Preparation example B50 | LiOH | MnO | NH₄H₂PO₄ | Mo(NO₃)₆ | Fe | H₄SiO₄ | NH₄F |
| Preparation example B51 | LiOH | MnO | NH₄H₂PO₄ | Mo(PO₄)₂ | FeO | H₄SiO₄ | NH₄F |
| Preparation example B52 | LiOH | MnO | NH₄H₂PO₄ | Mo(C₂O₄)₃ | FeO | H₄SiO₄ | NH₄F |
| Preparation example B53 | LiOH | MnO | NH₄H₂PO₄ | MoO₃ | FeO | H₄SiO₄ | NH₄F |
| Preparation example B54 | LiOH | MnO | NH₄H₂PO₄ | Mo | FeO | H₄SiO₄ | NH₄F |

### Preparation example B55

### (1) Preparation of doped manganese oxalate

1.2 mol of MnSO₄·H₂O and 0.79 mol of FeSO₄·H₂O were thoroughly mixed in a mixer for 6 hours; and a resulting mixture was transferred to a reactor, with the addition of 10 L of deionized water, 2 mol of oxalic acid dihydrate, and 0.01 mol of VCl₂. The reactor was heated to 80°C, and the stirring was carried out at 600 rpm for 6 hours until the reaction was terminated (no air bubbles were generated), and a Fe doped manganese oxalate suspension was obtained. The suspension was then filtered and a resulting filter cake was dried at 120°C and then ground to obtain Fe doped manganese oxalate particles with a median particle size Dᵥ50 of about 100 nm.

### (2) Preparation of doped lithium manganese phosphate

1 mol of Fe doped manganese oxalate particles, 0.45 mol of lithium carbonate, 0.05 mol of MgSO₄, an aqueous phosphoric acid solution with a concentration of 85% and containing 0.9 mol of phosphoric acid, 0.1 mol of H₄SiO₄, 0.05 mol of NH₄HF₂, and 0.005 mol of sucrose were added to 20 L of deionized water, and a resulting mixture was transferred to a sand mill and fully ground and stirred for 10 hours to obtain a slurry; the slurry was transferred to a spray drying apparatus for spray drying and granulation, with the drying temperature set to 250°C and the drying time to 4 hours, and particles were obtained; and the particles were sintered at 700°C for 10 h in a protective atmosphere of nitrogen (90% v/v) + hydrogen (10% v/v) to obtain a positive electrode active material. The element contents were examined using inductively coupled plasma emission spectrometry (ICP), and a chemical formula Li_{0.9}Mg_{0.05}Mn_{0.6}Fe_{0.395}V_{0.005}P_{0.9}Si_{0.1}O_{3.9}F_{0.1} was obtained.

### Preparation example B56

Same as Preparation example B55 except that in step (2), the amount of lithium carbonate was 0.55 mol, the amount of MgSO₄ was 0.001 mol, and the amount of NH₄HF₂ was 0.001 mol; and a positive electrode active material Li_{1.1}Mg_{0.001}Mn_{0.6}Fe_{0.395}V_{0.005}P_{0.9}Si_{0.1}O_{3.998}F_{0.002} was obtained.

### Preparation example B57

Same as Preparation example B55 except that in step (2), the amount of MgSO₄ was 0.1 mol, an aqueous phosphoric acid solution with a concentration of 85% contained 0.95 mol of phosphoric acid, the amount of H₄SiO₄ was 0.05 mol, and the amount of NH₄HF₂ was 0.025 mol; and a positive electrode active material Li_{0.9}Mg_{0.1}Mn_{0.6}Fe_{0.395}V_{0.005}P_{0.95}Si_{0.05}O_{3.95}F_{0.05} was obtained.

### Preparation example B58

Same as Preparation example B55 except that in step (1), the amount of MnSO₄·H₂O was 1.998 mol, the amount of FeSO₄·H₂O was 0.002 mol, and no VCl₂ was used; and that in step (2), the amount of lithium carbonate was 0.475 mol, an aqueous phosphoric acid solution with a concentration of 85% contained 0.96 mol of phosphoric acid, the amount of H₄SiO₄ was 0.04 mol, and the amount of NH₄HF₂ was 0.01 mol; and a positive electrode active material Li_{0.95}Mg_{0.05}Mn_{0.999}Fe_{0.001}P_{0.96}Si_{0.04}O_{3.99}F_{0.01} was obtained.

### Preparation example B59

Same as Preparation example B55 except that in step (1), the amount of MnSO₄·H₂O was 1.98 mol, the amount of FeSO₄·H₂O was 0.02 mol, and no VCl₂ was used; and that in step (2), the amount of lithium carbonate was 0.475 mol, an aqueous phosphoric acid solution with a concentration of 85% contained 0.96 mol of phosphoric acid, the amount of H₄SiO₄ was 0.04 mol, and the amount of NH₄HF₂ was 0.01 mol; and a positive electrode active material Li_{0.95}Mg_{0.05}Mn_{0.99}Fe_{0.01}P_{0.96}Si_{0.04}O_{3.99}F_{0.01} was obtained.

### Preparation example B60

Same as Preparation example B55 except that in step (1), the amount of MnSO₄·H₂O was 1.6 mol, the amount of FeSO4·H₂O was 0.4 mol, and no VCl₂ was used; and that in step (2), the amount of lithium carbonate was 0.475 mol, an aqueous phosphoric acid solution with a concentration of 85% contained 0.96 mol of phosphoric acid, the amount of H₄SiO₄ was 0.04 mol, and the amount of NH₄HF₂ was 0.01 mol; and a positive electrode active material Li_{0.95}Mg_{0.05}Mn_{0.8}Fe_{0.2}P_{0.96}Si_{0.04}O_{3.99}F_{0.01} was obtained.

### Comparative preparation example B 1

**Preparation of manganese oxalate:** 1 mol of MnSO₄·H₂O was added to a reactor, with the addition of 10 L of deionized water and 2 mol of oxalic acid dihydrate (based on oxalic acid); the reactor was heated to 80°C, and the stirring was carried out at 600 rpm for 6 hours until the reaction was terminated (no bubbles were generated), and a manganese oxalate suspension was obtained; and the suspension was then filtered and a resulting filter cake was dried at 120°C and then ground to obtain manganese oxalate particles with a median particle size Dᵥ50 of 50-200 nm.

**Preparation of lithium manganese phosphate:** 1 mol of the foregoing manganese oxalate particles, 0.5 mol of lithium carbonate, an aqueous phosphoric acid solution with a concentration of 85% and containing 1 mol of phosphoric acid, and 0.005 mol of sucrose were added to 20 L of deionized water; a resulting mixture was transferred to a sand mill and fully ground and stirred for 10 hours to obtain a slurry; the slurry was transferred to a spray drying apparatus for spray drying and granulation, with the drying temperature set to 250°C and the drying time to 4 hours, and particles were obtained; and the foregoing powder was sintered at 700°C for 10 hours in a protective atmosphere of nitrogen (90% by volume) and hydrogen (10% by volume) to obtain carbon-coated LiMnPO₄.

### Comparative preparation example B2

Same as Comparative preparation example B1 except that 0.85 mol of MnSO₄·H₂O and 0.15 mol of FeSO4·H₂O replaced 1 mol of MnSO₄·H₂O and were added to the mixer and mixed thoroughly for 6 hours, then added to the reactor.

### Comparative preparation example B3

Same as Preparation example B1 except that the amount of MnSO₄·H₂O was changed to 1.9 mol, 0.7 mol of FeSO4·H₂O was replaced to 0.1 mol of ZnSO₄, the amount of Li₂CO₃ was changed to 0.495 mol, 0.001 mol of M_{O}(SO₄)₃ was replaced with 0.005 mol of MgSO₄, and the amount of phosphoric acid was changed to 1 mol, without the addition of H₄SiO₄ and NH₄HF₂.

### Comparative preparation example B4

Same as Preparation example B1 except that the amount of MnSO₄·H₂O was changed to 1.2 mol, the amount of FeSO4·H₂O was changed to 0.8 mol, the amount of Li₂CO₃ was changed to 0.45 mol, 0.001 mol of Mo(SO₄)₃ was replaced with 0.005 mol of Nb₂(SO₄)₅, 0.999 mol of phosphoric acid was changed to 1 mol, and 0.0005 mol of NH₄HF₂ was changed to 0.025 mol, without the addition of H₄SiO₄.

### Comparative preparation example B5

Same as Preparation example B1 except that the amount of MnSO₄·H₂O was changed to 1.4 mol, the amount of FeSO4·H₂O was replaced to 0.6 mol, the amount of Li₂CO₃ was changed to 0.38 mol, and 0.001 mol of M_{O}(SO₄)₃ was replaced with 0.12 mol of MgSO₄.

### Comparative preparation example B6

Same as Preparation example B1 except that the amount of MnSO₄·H₂O was changed to 0.8 mol, 0.7 mol of FeSO4·H₂O was replaced to 1.2 mol of ZnSO₄, the amount of Li₂CO₃ was changed to 0.499 mol, and 0.001 mol of Mo(SO₄)₃ was replaced with 0.001 mol of MgSO₄.

### Comparative preparation example B7

Same as Preparation example B1 except that the amount of MnSO₄·H₂O was changed to 1.4 mol, the amount of FeSO₄·H₂O was changed to 0.6 mol, the amount of Li₂CO₃ was changed to 0.534 mol, 0.001 mol of M_{O}(SO₄)₃ was replaced with 0.001 mol of MgSO₄, the amount of phosphoric acid was changed to 0.88 mol, the amount of H₄SiO₄ was changed to 0.12 mol, and the amount of NH₄HF₂ was changed to 0.025 mol.

### Comparative preparation example B8

Same as Preparation example B1 except that the amount of MnSO₄·H₂O was changed to 1.2 mol, the amount of FeSO4·H₂O was changed to 0.8 mol, the amount of Li₂CO₃ was changed to 0.474 mol, 0.001 mol of M_{O}(SO₄)₃ was replaced with 0.001 mol of MgSO₄, the amount of phosphoric acid was changed to 0.93 mol, the amount of H₄SiO₄ was changed to 0.07 mol, and the amount of NH₄HF₂ was changed to 0.06 mol.

### Preparation of mixed positive electrode active material

### Examples 1 to 43 and Comparative example 1

The first positive electrode active material and the second positive electrode material were mixed and blended in a mixing tank. The mass of the first positive electrode material was m₁, the mass of the second positive electrode material was m₂, and the mass of the mixed positive electrode active material was m₁+m₂.

See Table 4 for parameters of examples and comparative examples.

**Table 4 Parameters of Examples 1 to 43 and Comparative Example 1**

| No. | First positive electrode active material | Second positive electrode active material | b value | m_{1/(}m₁+ m₂) | b×m_{1/(}m₁ +m₂₎ |
|---|---|---|---|---|---|
| Example 1 | Preparation example A1 | Preparation example B19 | 0.562 | 45% | 0.253 |
| Example 2 | Preparation example A2 | Preparation example B19 | 0.573 | 45% | 0.258 |
| Example 3 | Preparation example A3 | Preparation example B19 | 0.550 | 45% | 0.248 |
| Example 4 | Preparation example A4 | Preparation example B19 | 0.550 | 45% | 0.247 |
| Example 5 | Preparation example A5 | Preparation example B19 | 0.550 | 45% | 0.247 |
| Example 6 | Preparation example A6 | Preparation example B19 | 0.550 | 45% | 0.247 |
| Example 7 | Preparation example A7 | Preparation example B19 | 0.550 | 45% | 0.247 |
| Example 8 | Preparation example A8 | Preparation example B19 | 0.550 | 45% | 0.247 |
| Example 9 | Preparation example A9 | Preparation example B19 | 0.314 | 45% | 0.141 |
| Example 10 | Preparation example A10 | Preparation example B19 | 0.869 | 45% | 0.391 |
| Example 11 | Preparation example A11 | Preparation example B19 | 0.970 | 45% | 0.437 |
| Example 12 | Preparation example A12 | Preparation example B19 | 0.340 | 45% | 0.153 |
| Example 13 | Preparation example A13 | Preparation example B19 | 0.500 | 45% | 0.225 |
| Example 14 | Preparation example A14 | Preparation example B19 | 0.650 | 45% | 0.293 |
| Example 15 | Preparation example A15 | Preparation example B19 | 0.650 | 45% | 0.293 |
| Example 16 | Preparation example A16 | Preparation example B19 | 0.830 | 45% | 0.374 |
| Example 17 | Preparation example A17 | Preparation example B19 | 0.970 | 45% | 0.437 |
| Example 18 | Preparation example A18 | Preparation example B19 | 0.830 | 45% | 0.374 |
| Example 19 | Preparation example A19 | Preparation example B19 | 0.830 | 45% | 0.374 |
| Example 20 | Preparation example A20 | Preparation example B19 | 0.830 | 45% | 0.374 |
| Example 21 | Preparation example A21 | Preparation example B19 | 0.830 | 45% | 0.374 |
| Example 22 | Preparation example A22 | Preparation example B19 | 0.869 | 45% | 0.391 |
| Example 23 | Preparation example A16 | Preparation example B19 | 0.830 | 3% | 0.025 |
| Example 24 | Preparation example A16 | Preparation example B19 | 0.830 | 5% | 0.042 |
| Example 25 | Preparation example A16 | Preparation example B19 | 0.830 | 10% | 0.083 |
| Example 26 | Preparation example A16 | Preparation example B19 | 0.830 | 30% | 0.249 |
| Example 27 | Preparation example A16 | Preparation example B19 | 0.830 | 50% | 0.415 |
| Example 28 | Preparation example A16 | Preparation example B19 | 0.830 | 2% | 0.017 |
| Example 29 | Preparation example A16 | Preparation example B19 | 0.830 | 55% | 0.457 |
| Example 30 | Preparation example A15 | Preparation example B1 | 0.650 | 45% | 0.293 |
| Example 31 | Preparation example A15 | Preparation example B14 | 0.650 | 45% | 0.293 |
| Example 32 | Preparation example A15 | Preparation example B16 | 0.650 | 45% | 0.293 |
| Example 33 | Preparation example A15 | Preparation example B25 | 0.650 | 45% | 0.293 |
| Example 34 | Preparation example A15 | Preparation example B26 | 0.650 | 45% | 0.293 |
| Example 35 | Preparation example A15 | Preparation example B27 | 0.650 | 45% | 0.293 |
| Example 36 | Preparation example A15 | Preparation example B31 | 0.650 | 45% | 0.293 |
| Example 37 | Preparation example A15 | Preparation example B47 | 0.650 | 45% | 0.293 |
| Example 38 | Preparation example A15 | Preparation example B55 | 0.650 | 45% | 0.293 |
| Example 39 | Preparation example A15 | Preparation example B56 | 0.650 | 45% | 0.293 |
| Example 40 | Preparation example A15 | Preparation example B57 | 0.650 | 45% | 0.293 |
| Example 41 | Preparation example A15 | Preparation example B58 | 0.650 | 45% | 0.293 |
| Example 42 | Preparation example A15 | Preparation example B59 | 0.650 | 45% | 0.293 |
| Example 43 | Preparation example A15 | Preparation example B60 | 0.650 | 45% | 0.293 |
| Comparativ e Example 1 | Comparative preparation example A1 | Preparation example B19 | 0.585 | 45% | 0.263 |

### Preparation of full battery

The positive electrode active material, a conductive agent acetylene black, and a binder polyvinylidene difluoride (PVDF) at a weight ratio of 92:2.5:5.5 were mixed to uniformity in an N-methylpyrrolidone solvent system, and then the mixture was applied onto an aluminum foil, followed by drying and cold pressing, to obtain a positive electrode plate. The coating amount was 0.4 g/cm² and the compacted density was 2.4 g/cm³.

A negative electrode active material artificial graphite, hard carbon, a conductive agent acetylene black, a binder styrene-butadiene rubber (SBR), and a thickener sodium carboxymethyl cellulose (CMC) at a weight ratio of 90:5:2:2:1 were mixed to uniformity in deionized water, and then a resulting mixture was applied onto a copper foil, followed by drying and cold pressing to obtain a negative electrode plate. The coating amount was 0.2 g/cm² and the compacted density was 1.7 g/cm³.

With a polyethylene (PE) porous polymeric film as a separator, the positive electrode plate, the separator, and the negative electrode plate were stacked in sequence, so that the separator is placed between the positive and negative electrode plates for separation, and the resulting stack was wound to obtain a jelly roll. The jelly roll was placed in an outer package, an electrolyte the same as the electrolyte used for preparing the button cell was injected, and the outer package was sealed to obtain a full battery (also referred to as a "full cell" hereinafter).

### Preparation of button cell

The positive electrode active material, polyvinylidene fluoride (PVDF), and acetylene black at a weight ratio of 90:5:5 were added to N-methylpyrrolidone (NMP) and stirred in a drying room to obtain a slurry. The slurry was applied onto an aluminum foil, followed by drying and cold pressing, to obtain a positive electrode plate. The coating amount was 0.2 g/cm² and the compacted density was 2.0 g/cm³.

A lithium sheet used as the negative electrode, an electrolyte used with 1 mol/L LiPF₆ dissolved in ethylene carbonate (EC), diethyl carbonate (DEC), and dimethyl carbonate (DMC) at a volume ratio of 1:1:1, and the prepared positive electrode plate were assembled together in a button cell box to form a button battery (also referred to as a "button cell" hereinafter).

The foregoing positive electrode active material may be the first positive electrode active material, the second positive electrode active material, or a mixed positive electrode active material.

### Material performance test

### 1. Determination of chemical formula of positive electrode active material

An aberration corrected scanning transmission electron microscope (ACSTEM) was used for high spatial resolution characterization of the internal microstructure and surface structure of the positive electrode active material, and the chemical formula of the positive electrode active material was obtained in combination with three-dimensional reconstruction techniques.

### 2. Method for measuring lattice change rate

At a constant temperature of 25°C, the positive electrode active material samples were placed in an XRD instrument (model: Bruker D8 Discover), and the samples were tested at 1°/min. The test data were organized and analyzed, and the lattice constants a0, b0, c0, and v0 (where a0, b0, and c0 represent the lengths of faces of the unit cell, and v0 denotes the volume of the unit cell, which can be obtained directly from XRD refinement results) at this moment were calculated with reference to standard PDF cards.

The positive electrode active material was prepared into a button battery according to "Preparation of button battery", and the button battery was charged at a small rate of 0.05C until the current was reduced to 0.01C. The positive electrode plate was then taken out from the button cell and soaked in DMC for 8 hours, then dried, and scraped for powder, and particles with a particle size less than 500 nm were sifted out from the powder. Samples were taken and subjected to test in the same way as the fresh samples to calculate their lattice constant v1, and (v0-v1)/v0×100% was taken as their lattice change rates before and after complete deintercalation or intercalation of lithium to be listed in the table.

### 3. Method for measuring Li/Mn antisite defect concentration

The XRD test results in "Method for measuring lattice change rate" were compared with the standard PDF (Powder Diffraction File) cards for crystals to obtain the Li/Mn antisite defect concentration. Specifically, the XRD test results in the "Method for measuring lattice change rate" were imported into the general structural analysis system (GSAS) software to automatically derive the refinement results that contain the occupancy of the different atoms, and the Li/Mn antisite defect concentration was obtained by reading the refinement results.

### 4. Method for measuring surface oxygen valence

5 g of the positive electrode active material sample was taken and used for preparation of a button cell according to "Preparation of button battery" described above. The button cell was charged at a small rate of 0.05C until the current was reduced to 0.01C. The positive electrode plate was then taken out from the button cell and soaked in DMC for 8 hours, then dried, and scraped for powder, and particles with a particle size less than 500 nm were sifted out from the powder. The obtained particles were measured by using electron energy loss spectroscopy (EELS; the model of the instrument used was Talos F200S) to obtain energy loss near edge structures (ELNES) that reflect the density of states and energy level distribution of elements. Based on the density of states and energy level distribution, the number of occupying electrons was calculated by integrating the data of the valence band density of states to deduce the surface oxygen valence after charging.

### 5. Method for measuring compacted density

5 g of the positive electrode active material powder was taken and put in a special mold for compaction (CARVER mold, model 13 mm, USA), and then the mold was put on the compacted density meter. A pressure of 3T was applied to the positive electrode active material and the thickness of the powder under pressure (thickness after pressure relief) was read on the device, and the compacted density was calculated by ρ=m/v.

### 6. Method for measuring amount of Mn (and Mn-site doped Fe) dissolved after cycling

The positive electrode active material sample was used for preparation of a full battery according to "Preparation of full battery" described above.

The full battery that was cycled at 45°C until the capacity decayed to 80% was discharged to a cut-off voltage of 2.0 V at a rate of 0.1C. The battery was then disassembled to take out the negative electrode plate, and 30 discs with a unit area (1540.25 mm²) were randomly taken on the negative electrode plate and tested by using Agilent ICP-OES730 for inductively coupled plasma atomic emission spectroscopy (ICP). The amounts of Fe (if the Mn site of the positive electrode active material was doped with Fe) and Mn were calculated from the ICP results, so as to calculate the amount of Mn (and Fe doping at the Mn site) dissolved after cycling. The test standard was in accordance with EPA-6010D-2014.

### 7. Method for measuring initial gram capacity of button battery

Under 2.5-4.3 V, the button battery was charged to 4.3 V at 0.1C, then charged at a constant voltage of 4.3 V to a current less than or equal to 0.05 mA, left standing for 5 min, and then discharged to 2.0 V at 0.1C, and a discharge capacity at this moment was an initial gram capacity and recorded as D0.

### 8. Method for measuring 3C constant current charging ratio

In a constant temperature environment of 25°C, the fresh full battery was left standing for 5 min, and then discharged to 2.5 V at 1/3C, left standing for 5 min, charged to 4.3 V at 1/3C, then charged at a constant voltage of 4.3 V to a current less than or equal to 0.05 mA. After left standing for 5 min, a charge capacity of the full battery at this moment was recorded as C0. The full battery was discharged at 1/3C to 2.5 V, left standing for 5 min, then charged at 3C to 4.3 V. After left standing for 5 min, a charge capacity of the full battery at this moment was recorded as C1. The 3C constant current charging ratio was C1/C0×100%.

A higher 3C constant current charging ratio indicates better rate performance of the battery.

### 9. 45°C cycling performance test of full battery

In a constant temperature environment of 45°C, under 2.5-4.3 V, the full battery was charged to 4.3 V at 1C, and then charged at constant voltage of 4.3 V to a current less than or equal to 0.05 mA. After left standing for 5 min, the full battery was discharged to 2.5 V at 1C, and a discharge capacity at this moment was recorded as D0. The charge/discharge cycle was repeated until the discharge capacity was reduced to 80% of D0. The number of cycles the cell has undergone at this moment was recorded.

### 10. Swelling test for full battery at 60°C

Full batteries in 100% state of charge (SOC) were stored at 60°C. Before, during, and after the storage, the open circuit voltage (OCV) and alternating current internal resistance (IMP) of the cell were measured to monitor the SOCs, and the volumes of the cell were measured. The full battery was taken out after every 48 h of storage and left standing for 1 h. Then the open circuit voltage (OCV) and internal resistance (IMP) were measured, and the cell volume was measured by a drainage method after the battery was cooled to room temperature. In the drainage method, first a scale that automatically performs unit conversion on dial data was used to separately measure a weight of the cell, denoted as F₁, then the cell was completely placed into deionized water (density known to be 1 g/cm³), and the weight of the cell at this moment was measured as F₂. The buoyant force experienced by the cell, denoted as F_buoyancy, was calculated as F₁-F₂. Then, according to Archimedes' principle, F _buoyancy = ρ × g × 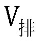 , the cell volume can be calculated as V=(F₁-F₂)/(ρ × g).

It can be learned from the OCV and IMP test results that the batteries of the examples always maintained an SOC of above 99% throughout the storage test.

After 30 days of storage, the cell volume was measured and the percentage increases in the cell volume after storage relative to the cell volume before storage was calculated.

In addition, the remaining capacity of the cell was measured. Under 2.5-4.3 V, the full battery was charged to 4.3 V at 1C, then charged at constant voltage of 4.3 V to a current less than or equal to 0.05 mA. After left standing for 5 min, a charge capacity of the full battery at this moment was recorded as the remaining capacity of the cell.

### 11. Method for measuring specific surface area (BET)

The specific surface area of the positive electrode active material was tested using a specific surface area and pore size analyzer, TRISTAR II 3020 (manufactured by Micromeritics Instrument Corporation, USA) in accordance with GB/T 19587-2004. Prior to the test, the positive electrode active material was dried at 200°C in a vacuum oven for at least 2 h, and the sample was required to be heavier than 20 g.

### 12. Particle size Dᵥ50 test

The particle size Dᵥ50 of the positive electrode active material was determined using a laser diffraction particle size analyzer, Mastersizer 3000 (manufactured by Malvern Panalytical) in accordance with GB/T19077-2016. Deionized water was used as the solvent, and the positive electrode active material was subjected to ultrasonic treatment for 5 min before the test.

### 13. ICP test (inductively coupled plasma optical emission spectroscopy)

The element percentage was determined using an iCAP 7400 inductively coupled plasma emission spectrometer in accordance with EPA 6010D-2014. The solvent used was aqua regia.

Calculation formula for element percentage in powder: element percentage (wt%)=100%×element mass/sample mass.

Calculation formula for element percentage in electrode plate: element percentage (wt%)=100%×element mass/(sample mass-current collector mass).

### 14. Test for percentage of Li₂CO₃ and LiOH (free lithium potentiometric titration test)

The testing was conducted using a 905 potentiometric titrator in accordance with GB/T 9736-2008. After sampling, the sample was immediately vacuum-sealed in an aluminum-plastic film bag. The minimum sample weight for a single test was greater than or equal to 30 g.

### 15. Crystal type test

Unless otherwise specified, in this application, terms such as "monocrystalline/monocrystalline-like particle" "quasi-monocrystalline particle" "monocrystalline particle", "monocrystalline material particle" or similar expressions have substantially the similar meaning, referring to an individual particle (namely, primary particle) and/or agglomerated particle. The agglomerated particle is a particle formed by aggregating no more than 100 (particularly about 5 to 50) primary particles with an average particle size of 50 nm to 10,000 nm.

Unless otherwise specified, in this application, terms such as "secondary particle" and "polycrystalline material particle" generally have the similar meaning, referring to a particle formed by agglomerating more than 100 primary particles with an average particle size of 50-800 nm.

The positive electrode active material was tested using a scanning electron microscope. The sample and magnification were adjusted to have more than 10 agglomerated particles in the field of view. The number of primary particles composing each agglomerated particle was measured, and the size in the length direction of the primary particle was measured using a ruler and recorded as the particle size. The particle sizes of the primary particles in each agglomerated particle were sorted in a descending order, and the largest 1/10 and the smallest 1/10 of the particle size data were removed. The remaining particle size data were averaged to obtain the average particle size of the primary particles in the agglomerated particle. If the number and average particle size of the primary particles in more than 50% (including 50%) of the agglomerated particles meet the definition of "polycrystalline material particle" described above, the positive electrode active material was determined to be a polycrystalline material. Otherwise, it was determined to be a monocrystalline or monocrystalline-like material.

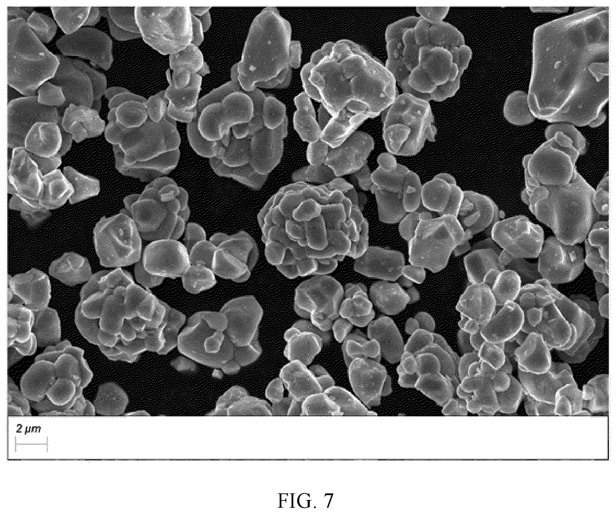

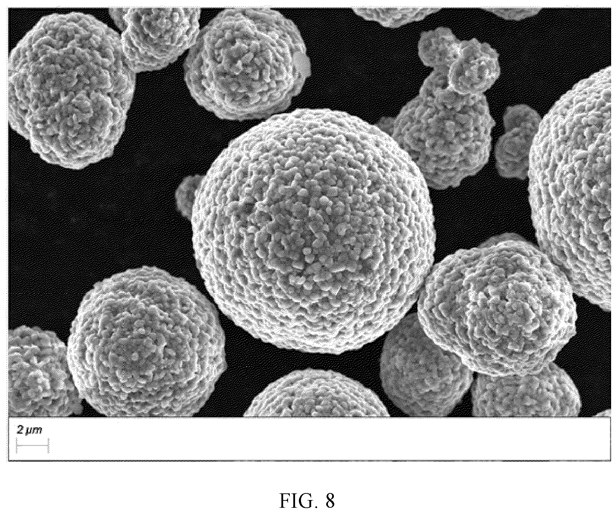

SEM images of first positive electrode active materials prepared in Preparation example A10 and Preparation example A15 of this application are as shown in FIGs. 7 and 8.

### 16. Hot box safety test

The test was conducted in accordance with the "Heating" chapter of GB 38031-2020 for safety test, and the upper boundary was explored. The following are the optimized test conditions:

### (1) Preparation

Test conditions: An explosion-proof drying oven that can be heated and has a line connector was prepared. The cell for test was a fresh jelly roll (cycling count ≤ 10), with temperature sensing wires attached around the cell and poles for temperature monitoring. Temperature recording equipment was also prepared.

Cell treatment before test: The cell was subjected to constant current and constant voltage charge at a rate of 0.33C to charge the cell to the nominal voltage (for example, the voltage is 4.3V in the present invention).
(2) Test process: The sample was placed in a high-temperature box. Temperature in the box was increased from room temperature to 100°C at a rate of 5°C/min and held at that temperature for 2 h. Then, heating was conducted at a temperate rise rate of 5°C/min and held at a corresponding temperature after each 5°C rise for 30 min until the cell experienced runaway (the runaway criteria: the voltage decreased by 50% or more within 1 min and the temperature of the cell increased by 50% or more within 1 min) or reached 200°C.
(3) Data processing: Based on the above conditions, the runaway point was determined, and the corresponding holding temperature and holding time were recorded as "time@temperature," for example, 21 min@150°C.
(4) Result benchmarking

A test sample that lasted for a longer time during the test had higher safety. The test sample that lasted for a longer time may be the sample having the same runaway point temperature but a longer time, the sample having the same runaway point time but a higher temperature, and the sample having different runaway point temperatures and times but a higher temperature.

**Table 5 Performance test results of first positive electrode active material**

| No. | First positive electrode active material | b+d+e+f | Mass percentage of Li₂CO₃ | Mass percentag e of LiOH | Crystal type | Particle size Dᵥ50 (µm) | Specific surface area (m²/g) | Compacted density @3T (g/cm³) | Number of cycles at 80% capacity retention rate at 45°C | Hot box test |
|---|---|---|---|---|---|---|---|---|---|---|
| Preparation example A1 | LiNi_{0.562}Co_{0.115}Mn_{0.28 3}Al_{0.04}O₂ | 1 | 0.05% | 0.07% | Monocrystalline-like | 4.1 | 0.68 | 3.18 | 1380 | 25 min @165°C |
| Preparation example A2 | LiNi_{0.573}Co_{0.118}Mn_{0.28 9}Mg_{0.02}O₂ | 1 | 0.05% | 0.07% | Monocrystalline-like | 4.2 | 0.67 | 3.19 | 1320 | 20 min @162°C |
| Preparation example A3 | LiNi_{0.55}Co_{0.113}Mn_{0.277} Al_{0.04}Mg_{0.02}O₂ | 1 | 0.05% | 0.07% | Monocrystalline-like | 4.1 | 0.68 | 3.18 | 1530 | 18 min @165°C |
| Preparation example A4 | LiNi_{0.55}Co_{0.047}Mn_{0.343} Al_{0.04}Mg_{0.02}O₂ | 1 | 0.05% | 0.07% | Monocrystalline-like | 3.8 | 0.85 | 3.14 | 1350 | 28 min @166°C |
| Preparation example A5 | LiNi_{0.55}Co_{0.141}Mn_{0.249} Al_{0.04}Mg_{0.02}O₂ | 1 | 0.09% | 0.08% | Monocrystalline-like | 2.3 | 1.13 | 3.11 | 1120 | 27 min @162°C |
| Preparation example A6 | LiNi_{0.55}Co_{0.113}Mn_{0.277} Al_{0.04}Mg_{0.02}O₂ | 1 | 0.05% | 0.06% | Monocrystalline-like | 5.8 | 0.45 | 3.40 | 1623 | 15 min @167°C |
| Preparation example A7 | LiNi_{0.55}Co_{0.235}Mn_{0.155} Al_{0.04}Mg_{0.02}O₂ | 1 | 0.05% | 0.04% | Monocrystalline-like | 4.3 | 0.58 | 3.25 | 1581 | 15 min @167°C |
| Preparation example A8 | LiNi_{0.55}Mn_{0.39}Al_{0.04}M g_{0.02}O₂ | 1 | 0.07% | 0.04% | Monocrystalline-like | 4.5 | 0.82 | 3.15 | 928 | 18 min @172°C |
| Preparation example A9 | LiNi_{0.314}Co_{0.313}Mn_{0.31 3}Al_{0.04}Mg_{0.02}O₂ | 1 | 0.05% | 0.06% | Monocrystalline-like | 4.4 | 0.55 | 3.29 | 1591 | 30 min @175°C |
| Preparation example A10 | LiNi_{0.869}Co_{0.048}Mn_{0.03 3}Al_{0.04}Mg_{0.01}O₂ | 1 | 0.22% | 0.25% | Monocrystalline-like | 3.7 | 0.79 | 3.24 | 1153 | 25 min @132°C |
| Preparation example A11 | LiNi_{0.97}Co_{0.005}Mn_{0.01} Al_{0.005}Mg_{0.01}O₂ | 1 | 0.19% | 0.31% | Monocrystalline-like | 3.5 | 1.15 | 3.30 | 755 | 24 min @120°C |
| Preparation example A12 | LiNi_{0.34}Co_{0.32}Mn_{0.28}A l_{0.04}Mg_{0.02}O₂ | 1 | 0.30% | 0.05% | Polycrystalline | 3 | 1.73 | 2.90 | 917 | 10 min @178°C |
| Preparation example A13 | LiNi_{0.5}Co_{0.282}Mn_{0.158} Al_{0.04}Mg_{0.02}O₂ | 1 | 0.33% | 0.07% | Polycrystalline | 3.5 | 1.32 | 2.92 | 982 | 13 min @180°C |
| Preparation example A14 | LiNi_{0.65}Co_{0.188}Mn_{0.102} Al_{0.04}Mg_{0.02}O₂ | 1 | 0.35% | 0.15% | Polycrystalline | 4.3 | 1.25 | 3.01 | 1039 | 15 min @155°C |
| Preparation example A15 | LiNi_{0.65}Co_{0.188}Mn_{0.102} Al_{0.04}Mg_{0.02}O₂ | 1 | 0.33% | 0.14% | Polycrystalline | 7.5 | 0.33 | 3.27 | 1247 | 22 min @159°C |
| Preparation example A16 | LiNi_{0.83}Co_{0.114}Mn_{0.006} Al_{0.04}Mg_{0.01}O₂ | 1 | 0.08% | 0.38% | Polycrystalline | 9.2 | 0.42 | 3.26 | 974 | 21 min @130°C |
| Preparation example A17 | LiNi_{0.97}Co_{0.005}Mn_{0.01} Al_{0.005}Mg_{0.01}O₂ | 1 | 0.32% | 0.46% | Polycrystalline | 7.3 | 0.38 | 3.23 | 712 | 11 min @122°C |
| Preparation example A18 | LiNi_{0.83}Co_{0.114}Mn_{0.006} Al_{0.04}Mg_{0.01}O₂ | 1 | 0.09% | 0.40% | Polycrystalline | 13.5 | 0.28 | 3.31 | 995 | 25 min @135°C |
| Preparation example A19 | LiNi_{0.83}Co_{0.095}Mn_{0.025} Al_{0.04}Mg_{0.01}O₂ | 1 | 0.20% | 0.70% | Polycrystalline | 9.3 | 0.41 | 3.25 | 837 | 18 min @130°C |
| Preparation example A20 | LiNi_{0.83}Co_{0.095}Mn_{0.025} Al_{0.04}Mg_{0.01}O₂ | 1 | 0.70% | 0.50% | Polycrystalline | 9.2 | 0.42 | 3.26 | 638 | 15 min @130°C |
| Preparation example A21 | LiNi_{0.83}Co_{0.095}Mn_{0.025} Al_{0.04}Mg_{0.01}O₂ | 1 | 1.00% | 1.00% | Polycrystalline | 9.1 | 0.43 | 3.27 | 510 | 22 min @130°C |
| Preparation example A22 | LiNi_{0.869}Co_{0.048}Mn_{0.03 3}Al_{0.04}Mg_{0.01}O₂ | 1 | 1.05% | 1.02% | Monocrystalline-like | 3.5 | 0.83 | 3.11 | 929 | 25 min @131°C |
| Comparative preparation example A1 | LiNi_{0.585}Co_{0.12}Mn_{0.295} O₂ | - | 0.05% | 0.07% | Monocrystalline-like | 4.20 | 0.66 | 3.19 | 735 | 18 min @165°C |

**Table 6 Chemical formulas of second positive electrode active materials of Preparation examples B1-B11 and Comparative preparation examples B1-B8**

| | Chemical formula | (1-y):y | a:x |
|---|---|---|---|
| Preparation example B1 | Li_{0.994}Mo_{0.001}Mn_{0.65}Fe_{0.35}P_{0.999}Si_{0.001}O_{3.999}F_{0.001} | 1.86 | 994 |
| Preparation example B2 | Li_{0.977}Mg_{0.001}Mn_{0.65}Fe_{0.34}Ti_{0.01}P_{0.999}N_{0.001}O_{3.999}F_{0.001} | 1.86 | 977 |
| Preparation example B3 | Li_{0.992}W_{0.001}Mn_{0.65}Fe_{0.35}P_{0.999}S_{0.001}O_{3.999}F_{0.001} | 1.86 | 992 |
| Preparation example B4 | Li_{0.997}Al_{0.001}Mn_{0.65}Fe_{0.35}P_{0.999}Si_{0.001}O_{3.999}Cl_{0.001} | 1.86 | 997 |
| Preparation example B5 | Li_{0.993}Nb_{0.001}Mn_{0.65}Fe_{0.345}V_{0.005}P_{0.999}S_{0.001}O_{3.999}F_{0.001} | 1.86 | 993 |
| Preparation example B6 | Li_{0.993}Nb_{0.001}Mn_{0.65}Fe_{0.34}V_{0.005}Mg_{0.005}P_{0.999}S_{0.001}O_{3.999}F_{0.001} | 1.86 | 993 |
| Preparation example B7 | Li_{0.993}Nb_{0.001}Mn_{0.65}Fe_{0.34}V_{0.005}Co_{0.005}P_{0.999}S_{0.001}O_{3.999}F_{0.001} | 1.86 | 993 |
| Preparation example B8 | Li_{0.993}Nb_{0.001}Mn_{0.65}Fe_{0.34}V_{0.005}Ni_{0.005}P_{0.999}S_{0.001}O_{3.999}F_{0.001} | 1.86 | 993 |
| Preparation example B9 | Li_{0.991}Nb_{0.001}Mn_{0.65}Fe_{0.349}Ti_{0.001}P_{0.999}S_{0.001}O_{3.999}Cl_{0.001} | 1.86 | 991 |
| Preparation example B10 | Li_{0.995}Nb_{0.001}Mn_{0.65}Fe_{0.34}V_{0.005}Mg_{0.005}P_{0.999}Si_{0.001}O_{3.999}Br_{0.001} | 1.86 | 995 |
| Preparation example B11 | Li_{0.998}Mg_{0.001}Mn_{0.65}Fe_{0.345}V_{0.005}P_{0.999}Si_{0.001}O_{3.999}Br_{0.001} | 1.86 | 998 |
| Comparative preparation example B1 | LiMnPO₄ | - | - |
| Comparative preparation example B2 | LiMn_{0.85}Fe_{0.15}PO₄ | - | - |
| Comparative preparation example B3 | Li_{0.990}Mg_{0.005}Mn_{0.95}Zn_{0.05}PO₄ | - | - |
| Comparative preparation example B4 | Li_{0.90}Nb_{0.01}Mn_{0.6}Fe_{0.4}PO_{3.95}F_{0.05} | - | - |
| Comparative preparation example B5 | Li_{0.76}Mg_{0.12}Mn_{0.7}Fe_{0.3}P_{0.999}Si_{0.001}O_{3.999}F_{0.001} | - | - |
| Comparative preparation example B6 | Li_{0.998}Mg_{0.001}Mn_{0.4}Zn_{0.6}P_{0.999}Si_{0.001}O_{3.999}F_{0.001} | - | - |
| Comparative preparation example B7 | Li_{1.068}Mg_{0.001}Mn_{0.7}Fe_{0.3}P_{0.88}Si_{0.12}O_{3.95}F_{0.05} | - | - |
| Comparative preparation example B8 | Li_{0.948}Mg_{0.001}Mn_{0.6}Fe_{0.4}P_{0.93}Si_{0.07}O_{3.88}F_{0.12} | - | - |

**Table 7 Performance data of second positive electrode active materials of Preparation examples B1-B11 and Comparative preparation examples B1-B8 or button cells or full cells prepared using the same, measured according to the performance test methods described above**

| | Lattice change rate (%) | Li/Mn antisite defect concentration (%) | Surface oxygen valence | Compacted density (g/cm³) | Amounts of Mn and Fe dissolved after cycling (ppm) | Initial gram capacity of button cell (mAh/g) | 3C constant current charging ratio (%) | Number of cycles at 80% capacity retention rate at 45°C | Cell swelling rate after storage at 60°C (%) |
|---|---|---|---|---|---|---|---|---|---|
| Comparative preparation example B1 | 11.4 | 5.2 | -1.55 | 1.7 | 2060 | 125.6 | 50.1 | 121 | 48.6 |
| Comparative preparation example B2 | 10.6 | 4.3 | -1.51 | 1.87 | 1510 | 126.4 | 50.4 | 129 | 37.3 |
| Comparative preparation example B3 | 10.8 | 3.6 | -1.64 | 1.88 | 1028 | 134.7 | 51.7 | 134 | 31.9 |
| Comparative preparation example B4 | 9.7 | 2.4 | -1.71 | 1.93 | 980 | 141.3 | 62.3 | 148 | 30.8 |
| Comparative preparation example B5 | 5.6 | 1.8 | -1.81 | 1.98 | 873 | 110.8 | 50.2 | 387 | 21.4 |
| Comparative preparation example B6 | 3.7 | 1.5 | -1.80 | 2.01 | 574 | 74.3 | 65.8 | 469 | 15.8 |
| Comparative preparation example B7 | 7.8 | 1.5 | -1.75 | 2.05 | 447 | 139.4 | 64.3 | 396 | 18.3 |
| Comparative preparation example B8 | 8.4 | 1.4 | -1.79 | 2.16 | 263 | 141.7 | 63.9 | 407 | 22.7 |
| Preparation example B 1 | 6.3 | 1.2 | -1.82 | 2.21 | 192 | 156.2 | 68.1 | 552 | 8.4 |
| Preparation example B2 | 6.8 | 1.1 | -1.85 | 2.25 | 161 | 153.4 | 75.1 | 583 | 7.5 |
| Preparation example B3 | 6.4 | 0.9 | -1.86 | 2.31 | 144 | 154.6 | 76.7 | 646 | 8.6 |
| Preparation example B4 | 5.5 | 0.9 | -1.89 | 2.38 | 125 | 153.6 | 78.4 | 638 | 8.3 |
| Preparation example B5 | 5.3 | 0.7 | -1.98 | 2.45 | 102 | 153.8 | 84.5 | 769 | 7.8 |
| Preparation example B6 | 2.4 | 0.7 | -1.95 | 2.47 | 88 | 157.5 | 92.5 | 747 | 6.4 |
| Preparation example B7 | 2.2 | 0.6 | -1.96 | 2.49 | 85 | 158.5 | 94.8 | 858 | 6.3 |
| Preparation example B8 | 3.4 | 0.5 | -1.98 | 2.51 | 79 | 157.6 | 93.8 | 726 | 6.2 |
| Preparation example B9 | 3.8 | 0.5 | -1.96 | 2.45 | 86 | 146.8 | 90.3 | 686 | 6.8 |
| Preparation example B10 | 4.0 | 0.6 | -1.97 | 2.46 | 103 | 155.7 | 91.2 | 638 | 6.5 |
| Preparation example B11 | 3.6 | 0.7 | -1.95 | 2.46 | 112 | 155.8 | 92.6 | 587 | 6.4 |

**Table 8 Chemical formulas and element ratios of second positive electrode active materials of Preparation examples B12-B27**

| | Chemical formula | (1-y):y | a:x |
|---|---|---|---|
| Preparation example B12 | Li_{0.997}Mg_{0.001}Mn_{0.68}Fe_{0.3}V_{0.02}P_{0.999}N_{0.001}O_{3.999}F_{0.001} | 2.26 | 997 |
| Preparation example B13 | Li_{0.997}Mg_{0.001}Mn_{0.58}Fe_{0.4}V_{0.02}P_{0.999}N_{0.001}O_{3.999}F_{0.001} | 1.45 | 997 |
| Preparation example B14 | Li_{0.997}Mg_{0.001}Mn_{0.65}Fe_{0.3}V_{0.05}P_{0.999}N_{0.001}O_{3.999}F_{0.001} | 2.17 | 997 |
| Preparation example B15 | Li_{0.988}Mg_{0.005}Mn_{0.6}Fe_{0.35}V_{0.05}P_{0.999}S_{0.001}O_{3.999}F_{0.001} | 1.71 | 197.6 |
| Preparation example B16 | Li_{0.984}Mg_{0.005}Mn_{0.6}Fe_{0.35}V_{0.05}P_{0.995}S_{0.005}O_{3.999}F_{0.001} | 1.71 | 196.8 |
| Preparation example B17 | Li_{0.984}Mg_{0.005}Mn_{0.6}Fe_{0.35}V_{0.05}P_{0.999}S_{0.001}O_{3.995}F_{0.005} | 1.71 | 196.8 |
| Preparation example B18 | Li_{0.984}Mg_{0.005}Mn_{0.65}Fe_{0.25}V_{0.05}Co_{0.05}P_{0.999}S_{0.001}O_{3.995}F_{0.005} | 2.60 | 196.8 |
| Preparation example B19 | Li_{0.984}Mg_{0.005}Mn_{0.65}Fe_{0.20}V_{0.05}Co_{0.10}P_{0.999}S_{0.001}O_{3.995}F_{0.005} | 3.25 | 196.8 |
| Preparation example B20 | Li_{0.984}Mg_{0.005}Mn_{0.75}Fe_{0.05}V_{0.05}Co_{0.15}P_{0.999}S_{0.001}O_{3.995}F_{0.005} | 15.0 | 196.8 |
| Preparation example B21 | Li_{0.984}Mg_{0.005}Mn_{0.65}Fe_{0.25}V_{0.05}Ni_{0.05}P_{0.999}S_{0.001}O_{3.995}F_{0.005} | 2.60 | 196.8 |
| Preparation example B22 | Li_{0.984}Mg_{0.005}Mn_{0.75}Fe_{0.10}V_{0.05}Ni_{0.10}P_{0.999}S_{0.001}O_{3.995}F_{0.005} | 7.50 | 196.8 |
| Preparation example B23 | Li_{0.984}Mg_{0.005}Mn_{0.7}Fe_{0.15}V_{0.05}Co_{0.10}P_{0.999}S_{0.001}O_{3.995}F_{0.005} | 4.67 | 196.8 |
| Preparation example B24 | Li_{0.984}Mg_{0.005}Mn_{0.6}Fe_{0.25}V_{0.05}Co_{0.10}P_{0.999}S_{0.001}O_{3.995}F_{0.005} | 2.40 | 196.8 |
| Preparation example B25 | Li_{0.984}Mg_{0.005}Mn_{0.5}Fe_{0.35}V_{0.05}Co_{0.10}P_{0.999}S_{0.001}O_{3.995}F_{0.005} | 1.43 | 196.8 |
| Preparation example B26 | Li_{1.01}Mg_{0.005}Mn_{0.7}Fe_{0.15}V_{0.05}Co_{0.10}P_{0.9}Si_{0.1}O_{3.92}F_{0.08} | 4.67 | 202 |
| Preparation example B27 | Li_{0.97}Mg_{0.005}Mn_{0.7}Fe_{0.15}V_{0.05}Co_{0.10}P_{0.92}Si_{0.08}O_{3.9}F_{0.1} | 4.67 | 194 |

**Table 9 Performance data of second positive electrode active materials of Preparation examples B12-B27 or button cells or full cells prepared using the same, measured according to the performance test methods described above**

| | Lattice change rate (%) | Li/Mn antisite defect concentration (%) | Surface oxygen valence | Compacted density (g/cm³) | Amounts of Mn and Fe dissolved after cycling (ppm) | Initial gram capacity of button cell (mAh/g) | 3C constant current charging ratio (%) | Number of cycles at 80% capacity retention rate at 45°C | Cell swelling rate after storage at 60°C (%) |
|---|---|---|---|---|---|---|---|---|---|
| Preparation example B12 | 7.4 | 0.5 | -1.96 | 2.45 | 92 | 153.3 | 97.2 | 948 | 6.7 |
| Preparation example B13 | 7.6 | 0.4 | -1.98 | 2.48 | 83 | 157.1 | 85.1 | 953 | 7.8 |
| Preparation example B14 | 7.8 | 0.6 | -1.95 | 2.47 | 87 | 155.4 | 85.2 | 1067 | 6.9 |
| Preparation example B15 | 6.4 | 0.5 | -1.97 | 2.49 | 86 | 156.4 | 82.1 | 938 | 7.5 |
| Preparation example B16 | 5.4 | 0.7 | -1.94 | 2.44 | 86 | 156.1 | 87.3 | 927 | 8.4 |
| Preparation example B17 | 4.2 | 0.6 | -1.98 | 2.42 | 88 | 156.5 | 92.1 | 919 | 7.5 |
| Preparation example B18 | 2.5 | 0.4 | -1.96 | 2.46 | 84 | 157.4 | 94.0 | 1057 | 6.4 |
| Preparation example B19 | 2.4 | 0.4 | -1.97 | 2.47 | 84 | 156.8 | 94.4 | 1064 | 6.7 |
| Preparation example B20 | 2.6 | 0.4 | -1.95 | 2.45 | 86 | 154.8 | 93.7 | 975 | 7.3 |
| Preparation example B21 | 3.3 | 0.5 | -1.93 | 2.46 | 82 | 155.7 | 91.5 | 989 | 6.3 |
| Preparation example B22 | 3.1 | 0.5 | -1.95 | 2.46 | 75 | 157.3 | 91.6 | 964 | 6.3 |
| Preparation example B23 | 2.8 | 0.6 | -1.96 | 2.44 | 67 | 151.8 | 84.4 | 864 | 5.9 |
| Preparation example B24 | 2.5 | 0.5 | -1.97 | 2.45 | 65 | 152.3 | 90.2 | 976 | 5.6 |
| Preparation example B25 | 2.2 | 0.4 | -1.98 | 2.46 | 58 | 153.3 | 92.2 | 986 | 5.2 |
| Preparation example B26 | 3.4 | 0.6 | -1.95 | 2.25 | 45 | 147.3 | 92.5 | 978 | 9.3 |
| Preparation example B27 | 2.7 | 0.5 | -1.98 | 2.28 | 42 | 145.8 | 91.8 | 937 | 10.5 |

**Table 10 Performance data of second positive electrode active materials of Preparation examples B28-B41 or button cells or full cells prepared using the same, measured according to the performance test methods described above**

| | Lattice change rate (%) | Li/Mn anti site defect concentration | Surface oxygen valence | Compacted density (g/cm³) | Amounts of Mn and Fe dissolved after cycling (ppm) | Initial gram capacity of button cell (mAh/g) | 3C constant current charging ratio (%) | Number of cycles at 80% capacity retention rate at 45°C | Cell swelling rate after storage at 60°C (%) |
|---|---|---|---|---|---|---|---|---|---|
| Preparation example B28 | 7.8 | 5.6 | -1.59 | 1.89 | 341 | 138.1 | 53.1 | 594 | 24.1 |
| Preparation example B29 | 7.4 | 4.8 | -1.62 | 1.94 | 279 | 140.3 | 55.6 | 628 | 22.4 |
| Preparation example B30 | 7.2 | 4.5 | -1.66 | 1.98 | 248 | 141.5 | 56.8 | 689 | 21.6 |
| Preparation example B31 | 7.1 | 4.1 | -1.68 | 2.01 | 216 | 142.3 | 57.5 | 721 | 18.7 |
| Preparation example B32 | 6.8 | 3.8 | -1.71 | 2.04 | 184 | 143.8 | 59.3 | 749 | 15.6 |
| Preparation example B33 | 6.7 | 3.4 | -1.75 | 2.06 | 176 | 144.2 | 61.4 | 756 | 11.3 |
| Preparation example B34 | 6.6 | 3.1 | -1.76 | 2.08 | 139 | 148.2 | 62.6 | 787 | 10.8 |
| Preparation example B35 | 6.4 | 2.7 | -1.76 | 2.13 | 126 | 149.8 | 63.8 | 816 | 9.6 |
| Preparation example B36 | 6.4 | 1.9 | -1.77 | 2.15 | 103 | 152.3 | 65.4 | 937 | 8.9 |
| Preparation example B37 | 6.4 | 1.4 | -1.84 | 2.27 | 89 | 157.2 | 69.1 | 982 | 8.2 |
| Preparation example B38 | 6.5 | 1.8 | -1.78 | 2.16 | 113 | 153.9 | 66.3 | 921 | 9.1 |
| Preparation example B39 | 6.8 | 2.7 | -1.76 | 2.12 | 134 | 152.1 | 64.5 | 998 | 9.8 |
| Preparation example B40 | 7.1 | 3.4 | -1.74 | 2.08 | 161 | 150.2 | 63.4 | 926 | 10.5 |
| Preparation example B41 | 7.8 | 4.5 | -1.70 | 2.03 | 189 | 148.1 | 61.3 | 837 | 11.8 |

**Table 11 Performance data of second positive electrode active materials of Preparation examples B42-B60 or button cells or full cells prepared using the same, measured according to the performance test methods described above**

| | Lattice change rate (%) | Li/Mn anti site defect concentration | Surface oxygen valence | Compacted density (g/cm³) | Amounts of Mn and Fe dissolved after cycling (ppm) | Initial gram capacity of button cell (mAh/g) | 3C constant current charging ratio (%) | Number of cycles at 80% capacity retention rate at 45°C | Cell swelling rate after storage at 60°C (%) |
|---|---|---|---|---|---|---|---|---|---|
| Preparation example B42 | 6.5 | 2.8 | -1.8 | 2.19 | 95 | 155.7 | 67.3 | 519 | 10.3 |
| Preparation example B43 | 6.7 | 2.6 | -1.81 | 2.18 | 88 | 156.1 | 67.6 | 525 | 9.8 |
| Preparation example B44 | 6.8 | 2.7 | -1.83 | 2.2 | 91 | 155.5 | 67.5 | 522 | 10.1 |
| Preparation example B45 | 6.7 | 2.6 | -1.82 | 2.17 | 85 | 155.9 | 67.4 | 517 | 9.5 |
| Preparation example B46 | 6.4 | 2.5 | -1.83 | 2.18 | 134 | 150.9 | 61.4 | 501 | 11.6 |
| Preparation example B47 | 6.1 | 2.1 | -1.81 | 2.21 | 114 | 152.8 | 63.7 | 518 | 10.8 |
| Preparation example B48 | 6.6 | 1.8 | -1.79 | 2.23 | 105 | 154.3 | 65.4 | 538 | 9.2 |
| Preparation example B49 | 6.4 | 1.4 | -1.85 | 2.22 | 95 | 156.6 | 68.4 | 572 | 8.7 |
| Preparation example B50 | 7.5 | 3.4 | -1.75 | 2.08 | 115 | 149.5 | 58.3 | 426 | 9.6 |
| Preparation example B51 | 6.5 | 1.5 | -1.83 | 2.21 | 95 | 155.8 | 67.5 | 531 | 8.8 |
| Preparation example B52 | 6.8 | 1.7 | -1.81 | 2.23 | 101 | 154.6 | 66.9 | 518 | 7.4 |
| Preparation example B53 | 6.6 | 1.6 | -1.82 | 2.24 | 118 | 155.3 | 67.2 | 508 | 7.9 |
| Preparation example B54 | 8.7 | 2.4 | -1.79 | 2.17 | 129 | 152.3 | 65.4 | 483 | 11.2 |
| Preparation example B55 | 5.1 | 2.2 | -1.82 | 2.25 | 93 | 153.1 | 66.5 | 562 | 7.9 |
| Preparation example B56 | 4.8 | 2.0 | -1.83 | 2.23 | 112 | 156.8 | 67.1 | 550 | 8.1 |
| Preparation example B57 | 4.8 | 2.4 | -1.81 | 2.21 | 97 | 153.4 | 65.7 | 557 | 7.5 |
| Preparation example B58 | 5.4 | 3.2 | -1.74 | 2.20 | 220 | 144.5 | 55.2 | 429 | 12.7 |
| Preparation example B59 | 5.3 | 2.8 | -1.78 | 2.21 | 187 | 148.3 | 58.3 | 458 | 11.9 |
| Preparation example B60 | 5.3 | 2.6 | -1.80 | 2.23 | 163 | 152.4 | 61.5 | 512 | 10.3 |

It can be seen from Tables 7, 9, 10, and 11 above, the second positive electrode active materials of the preparation examples of this application all achieved better effect than the comparative preparation examples in one or even all of the cycling performance, high-temperature stability, gram capacity, and compacted density.

It can be seen from the comparisons between Preparation examples B 18-B20 and B23-B25 that, under the condition of other elements being the same, (1-y):y in the range of 1 to 4 can help to further improve the energy density and cycling performance of the secondary batteries.

**Table 12 Test result of mixed positive electrode active material**

| No. | First positive electrode active material | Second positive electrode active material | Chemical formula of second positive electrode active material | Number of cycles at 80% capacity retention rate at 45°C | Hot box test |
|---|---|---|---|---|---|
| Example 1 | Preparation example A1 | Preparation example B19 | Li_{0.984}Mg_{0.005}Mn_{0.65}Fe_{0.20}V_{0.05}Co_{0.10}P_{0.999}S_{0.001}O_{3.995}F_{0.005} | 1001 | 29 min @185°C |
| Example 2 | Preparation example A2 | Preparation example B19 | Same as Example 1 | 1020 | 7 min @180°C |
| Example 3 | Preparation example A3 | Preparation example B19 | Same as Example 1 | 1030 | 2 min @185°C |
| Example 4 | Preparation example A4 | Preparation example B19 | Same as Example 1 | 934 | 2 min @191°C |
| Example 5 | Preparation example A5 | Preparation example B19 | Same as Example 1 | 1053 | 27 min @182°C |
| Example 6 | Preparation example A6 | Preparation example B19 | Same as Example 1 | 604 | 27 min @180°C |
| Example 7 | Preparation example A7 | Preparation example B19 | Same as Example 1 | 1153 | 2 min @183°C |
| Example 8 | Preparation example A8 | Preparation example B19 | Same as Example 1 | 582 | 18 min @175°C |
| Example 9 | Preparation example A9 | Preparation example B19 | Same as Example 1 | 552 | 2 min @191°C |
| Example 10 | Preparation example A10 | Preparation example B19 | Same as Example 1 | 653 | 2 min @145°C |
| Example 11 | Preparation example A1 1 | Preparation example B19 | Same as Example 1 | 587 | 25 min @138°C |
| Example 12 | Preparation example A12 | Preparation example B19 | Same as Example 1 | 592 | 7 min @190°C |
| Example 13 | Preparation example A13 | Preparation example B19 | Same as Example 1 | 763 | 28 min @185°C |
| Example 14 | Preparation example A14 | Preparation example B19 | Same as Example 1 | 1182 | 22 min @170°C |
| Example 15 | Preparation example A15 | Preparation example B19 | Same as Example 1 | 1397 | 28 min @172°C |
| Example 16 | Preparation example A16 | Preparation example B19 | Same as Example 1 | 1100 | 15 min @144°C |
| Example 17 | Preparation example A17 | Preparation example B19 | Same as Example 1 | 870 | 15 min @140°C |
| Example 18 | Preparation example A18 | Preparation example B19 | Same as Example 1 | 791 | 15 min @ 141°C |
| Example 19 | Preparation example A19 | Preparation example B19 | Same as Example 1 | 1153 | 17 min @144°C |
| Example 20 | Preparation example A20 | Preparation example B19 | Same as Example 1 | 708 | 13 min @145°C |
| Example 21 | Preparation example A21 | Preparation example B19 | Same as Example 1 | 613 | 19 min @140°C |
| Example 22 | Preparation example A22 | Preparation example B19 | Same as Example 1 | 634 | 26 min @143°C |
| Example 23 | Preparation example A16 | Preparation example B19 | Same as Example 1 | 1063 | 30 min @200°C |
| Example 24 | Preparation example A16 | Preparation example B19 | Same as Example 1 | 1075 | 30 min @200°C |
| Example 25 | Preparation example A16 | Preparation example B19 | Same as Example 1 | 1087 | 18 min @182°C |
| Example 26 | Preparation example A16 | Preparation example B19 | Same as Example 1 | 1099 | 9 min @160°C |
| Example 27 | Preparation example A16 | Preparation example B19 | Same as Example 1 | 1111 | 23 min @138°C |
| Example 28 | Preparation example A16 | Preparation example B19 | Same as Example 1 | 1052 | 30 min @200°C |
| Example 29 | Preparation example A16 | Preparation example B19 | Same as Example 1 | 1057 | 15 min @135°C |
| Example 30 | Preparation example A15 | Preparation example B1 | Li_{0.994}Mo_{0.001}Mn_{0.65}Fe_{0.35}P_{0.999}Si_{0.001}O_{3.999}F_{0.001} | 716 | 25 min @175°C |
| Example 31 | Preparation example A15 | Preparation example B14 | Li_{0.997}Mg_{0.001}Mn_{0.65}Fe_{0.3}V_{0.05}P_{0.999}N_{0.001}O_{3.999}F_{0.001} | 1399 | 23 min @ 177°C |
| Example 32 | Preparation example A15 | Preparation example B16 | Li_{0.984}Mg_{0.005}Mn_{0.6}Fe_{0.35}V_{0.05}P_{0.995}S_{0.005}O_{3.999}F_{0.001} | 1298 | 28 min @172°C |
| Example 33 | Preparation example A15 | Preparation example B25 | Li_{0.984}Mg_{0.005}Mn_{0.5}Fe_{0.35}V_{0.05}Co_{0.10}P_{0.999}S_{0.001}O_{3.995}F_{0.005} | 1341 | 22 min @176°C |
| Example 34 | Preparation example A15 | Preparation example B26 | Li_{1.01}Mg_{0.005}Mn_{0.7}Fe_{0.15}V_{0.05}Co_{0.10}P_{0.9}Si_{0.1}O_{3.92}F_{0.08} | 1335 | 30 min @172°C |
| Example 35 | Preparation example A15 | Preparation example B27 | Li_{0.97}Mg_{0.005}Mn_{0.7}Fe_{0.15}V_{0.05}Co_{0.10}P_{0.92}Si_{0.08}O_{3.9}F_{0.1} | 1305 | 27 min @173°c |
| Example 36 | Preparation example A15 | Preparation example B31 | Li_{0.994}Mo_{0.001}Mn_{0.65}Fe_{0.35}P_{0.999}Si_{0.001}O_{3.999}F_{0.001} | 1149 | 21 min @ 177°C |
| Example 37 | Preparation example A15 | Preparation example B47 | Li_{0.994}Mo_{0.001}Mn_{0.65}Fe_{0.35}P_{0.999}Si_{0.001}O_{3.999}F_{0.001} | 1003 | 29 min @172°C |
| Example 38 | Preparation example A15 | Preparation example B55 | Li_{0.9}Mg_{0.05}Mn_{0.6}Fe_{0.395}V_{0.005}P_{0.9}Si_{0.1}O_{3.9}F_{0.1} | 938 | 22 min @ 173°C |
| Example 39 | Preparation example A15 | Preparation example B56 | Li_{1.1}Mg_{0.001}Mn_{0.6}Fe_{0.395}V_{0.005}P_{0.9}Si_{0.1}O_{3.998}F_{0.002} | 893 | 25 min @174°C |
| Example 40 | Preparation example A15 | Preparation example B57 | Li_{0.9}Mg_{0.1}Mn_{0.6}Fe_{0.395}V_{0.005}P_{0.95}Si_{0.05}O_{3.95}F_{0.05} | 919 | 28 min @171°C |
| Example 41 | Preparation example A15 | Preparation example B58 | Li_{0.95}Mg_{0.05}Mn_{0.999}Fe_{0.001}P_{0.96}Si_{0.04}O_{3.99}F_{0.01} | 606 | 23 min @ 172°C |
| Example 42 | Preparation example A15 | Preparation example B59 | Li_{0.95}Mg_{0.05}Mn_{0.99}Fe_{0.01}P_{0.96}Si_{0.04}O_{3.99}F_{0.01} | 591 | 25 min @175°C |
| Example 43 | Preparation example A15 | Preparation example B60 | Li_{0.95}Mg_{0.05}Mn_{0.8}Fe_{0.2}P_{0.96}Si_{0.04}O_{3.99}F_{0.01} | 760 | 21 min @174°C |
| Comparative Example 1 | Comparative preparation example A1 | Preparation example B19 | Same as Example 1 | 508 | 22 min @180°C |

From Table 12
It can be learned from comparisons between Examples 1-43 and Comparative example 1 that the secondary batteries prepared with the mixed first positive electrode active material and second positive electrode active material in this application exhibit higher cycling capacity retention rate and longer cycle life compared to the secondary battery prepared in Comparative example 1; and the secondary batteries prepared with the mixed positive electrode active material of Examples 1, 3-7, 9, 12, 13, 23-25, and 28 of this application exhibit better safety compared to the secondary battery prepared in Comparative Example 1.

It can be learned from comparisons between Example 16 and Examples 23-29 that when the first positive electrode active material and second positive electrode active material in this application meet the mass relation that m₁/(m₁+m₂) is 3%-50%, the secondary batteries prepared exhibit further increased cycling capacity retention rate and further extended cycle life.

When b×m₁/(m₁+m₂) of the first positive electrode active material and second positive electrode active material in this application is less than or equal to 0.457, the secondary batteries prepared exhibit high cycling capacity retention rate, long cycle life, and high safety. It can be learned from comparisons between Example 16 and Examples 23-29 that when the first positive electrode active material and second positive electrode active material in this application meet the mass relation that b×m₁/(m₁+m₂) is in the range of 0.025-0.415, the secondary batteries prepared exhibit further increased cycling capacity retention rate, further extended cycle life, and further improved safety.

It can be learned from comparisons between Examples 1-11 and 22 that when the first positive electrode active material is monocrystalline-like, the secondary batteries prepared using the first positive electrode active material with a particle size Dᵥ50 less than or equal to 5.8 µm exhibits high cycling capacity retention rate, long cycle life, and high safety, and the secondary batteries prepared using the first positive electrode active material with a particle size Dᵥ50 less than or equal to 4.3 µm exhibit higher cycling capacity retention rate and longer cycle life.

It can be learned from comparisons between Examples 12-21 that when the first positive electrode active material is polycrystalline, the secondary batteries prepared using the first positive electrode active material with a particle size Dᵥ50 of 3.5-13.5 µm, a BET specific surface area less than or equal to 1.32 m²/g, and a compacted density greater than or equal to 2.92 g/cm³ under a pressure of 3T exhibit higher cycling capacity retention rate and longer cycle life.

It can be learned from comparisons between Examples 1-8, 10, 11, and 22 that when the first positive electrode active material is monocrystalline-like, the secondary batteries prepared using the first positive electrode active material LiNi_{b}Co_{d}MnₑM_{f}O₂ with d selected from 0.047-0.320 exhibit higher cycling capacity retention rate and longer cycle life.

The secondary batteries prepared using the first positive electrode active material LiNi_{b}Co_{d}MnₑM_{f}O₂ in this application with b selected from the range of 0.314-0.970 exhibit high cycling capacity retention rate, long cycle life, and high safety. It can be learned from comparisons between Examples 1-11 and 22 that when the first positive electrode active material is a monocrystalline or quasi-monocrystalline material, the secondary batteries prepared with b greater than 0.314 and less than 0.97 (excluding the values of 0.314 and 0.97) exhibit higher cycling capacity retention rate and longer cycle life.

It can be learned from comparisons between Examples 10 and 22 that the secondary batteries prepared using the first positive electrode active material with a mass percentage of lithium carbonate less than or equal to 1% and a mass percentage of lithium hydroxide less than or equal to 1% exhibit higher cycling capacity retention rate, longer cycle life, and higher safety.

From comparisons between Table 5 and Table 12
Compared with the secondary batteries prepared using the first positive electrode active material, the secondary batteries prepared using the mixed positive electrode active material containing the corresponding first positive electrode active material in this application exhibit higher safety. Compared with the secondary batteries prepared using the first positive electrode active materials in Preparation Examples A14-A17 and A19-A21, the secondary batteries prepared using the mixed positive electrode active material containing the corresponding first positive electrode active material in this application exhibit higher cycling capacity retention rate and longer cycle life.

From comparisons between Tables 7, 9, 10, 11, and Table 12
Compared with the secondary batteries prepared using the second positive electrode active materials in Preparation Examples B 1, B 14, B 16, B25, B26, B27, B31, B47, and B55-B60, the secondary batteries prepared using the mixed positive electrode active material containing the corresponding second positive electrode active material in this application exhibit higher cycling capacity retention rate and longer cycle life.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A positive electrode active material, comprising a first positive electrode active material and a second positive electrode active material, wherein
the first positive electrode active material comprises a compound LiNi_{b}Co_{d}MnₑMfO₂, wherein b is selected from the range of 0.314-0.970; d is selected from the range of 0-0.320 and optionally the range of 0.047-0.320; e is selected from the range of 0.006-0.390; a sum of b, d, e, and f is 1 with f greater than 0; and M is one or more elements selected from Mn, Al, Mg, Ca, Na, Ti, W, Zr, Sr, Cr, Zn, Ba, B, S, and Y, and optionally M is Mg and/or Al; and
the second positive electrode active material comprises a compound LiₐAₓMn_{1-y}B_{y}P_{1-z}C_{z}O₄₋ₙDₙ, wherein a is selected from the range of 0.9-1.1; x is selected from the range of 0.001-0.1; y is selected from the range of 0.001-0.5; z is selected from the range of 0.001-0.1; n is selected from the range of 0.001-0.1; Ais one or more elements selected from Zn, Al, Na, K, Mg, Nb, Mo, and W; B is one or more elements selected from Ti, V, Zr, Fe, Ni, Mg, Co, Ga, Sn, Sb, Nb, and Ge; C is one or more elements selected from B, S, Si, and N; and D is one or more elements selected from S, F, Cl, and Br.

2. The positive electrode active material according to claim 1, wherein mass of the first positive electrode active material is m₁, mass of the second positive electrode active material is m₂, and the value of m₁/(m₁+m₂) is 2%-55% and optionally 3%-50%.

3. The positive electrode active material according to claim 1 or 2, wherein the value of b×m₁/(m₁+m₂) is 0.017-0.457 and optionally 0.025-0.415.

4. The positive electrode active material according to any one of claims 1 to 3, wherein the first positive electrode active material is a monocrystalline or quasi-monocrystalline material, and particle size Dᵥ50 of the first positive electrode active material is less than or equal to 5.8 µm, optionally 2.3-5.8 µm, and more optionally 2.3-4.3 µm.

5. The positive electrode active material according to any one of claims 1 to 4, wherein when the first positive electrode active material is a monocrystalline or quasi-monocrystalline material,
d is selected from the range of 0.05-0.320 and optionally the range of 0.05-0.282, and/or
b is greater than 0.314 and less than 0.97 and optionally selected from the range of 0.55-0.869.

6. The positive electrode active material according to any one of claims 1 to 5, wherein the first positive electrode active material is a polycrystalline material, and particle size Dᵥ50 of the first positive electrode active material is 3.0-13.5 µm and optionally 3.5-13.5 µm, and/or
BET specific surface area of the first positive electrode active material is less than or equal to 1.73 m²/g, optionally less than or equal to 1.32 m²/g, and more optionally is 0.28-1.32 m²/g, and/or
compacted density of the first positive electrode active material under 3T pressure is greater than or equal to 2.90 g/cm³, optionally greater than or equal to 2.92 g/cm³, and more optionally is 2.92-3.31 g/cm³.

7. The positive electrode active material according to any one of claims 1 to 6, wherein the first positive electrode active material further comprises lithium carbonate and/or lithium hydroxide; and
optionally, based on mass of the first positive electrode active material, a mass percentage of the lithium carbonate is less than or equal to 1.05% and optionally less than or equal to 1%, and/or a mass percentage of the lithium hydroxide is less than or equal to 1.02% and optionally less than or equal to 1%.

8. The positive electrode active material according to any one of claims 1 to 7, wherein A is any one element selected from Zn, Al, Na, K, Mg, Nb, Mo, and W; B is at least two elements selected from Ti, V, Zr, Fe, Ni, Mg, Co, Ga, Sn, Sb, Nb, and Ge; C is any one element selected from B, S, Si, and N; and D is any one element selected from S, F, Cl, and Br;
optionally, A is Mg or Nb, and/or
B is at least two elements selected from Fe, Ti, V, Co, and Mg, and more optionally is Fe and one or more elements selected from Ti, V, Co, and Mg, and/or
C is S, and/or
D is F.

9. The positive electrode active material according to any one of claims 1 to 8, wherein x is selected from the range of 0.001-0.005; and/or
y is selected from the range of 0.01-0.5 and optionally the range of 0.25-0.5; and/or
z is selected from the range of 0.001-0.005; and/or
n is selected from the range of 0.001-0.005.

10. The positive electrode active material according to any one of claims 1 to 9, wherein a value of (1-y):y is selected from the range of 1-4 and optionally the range of 1.5-3, and a value of a:x is selected from the range of 9-1100 and optionally the range of 190-998.

11. The positive electrode active material according to any one of claims 1 to 10, wherein a lattice change rate of the second positive electrode active material before and after complete deintercalation or intercalation of lithium is below 8% and optionally below 4%.

12. The positive electrode active material according to any one of claims 1 to 11, wherein Li/Mn antisite defect concentration of the second positive electrode active material is below 2% and optionally below 0.5%.

13. The positive electrode active material according to any one of claims 1 to 12, wherein a surface oxygen valence of the second positive electrode active material is less than -1.82 and optionally is -1.89 to -1.98.

14. The positive electrode active material according to any one of claims 1 to 13, wherein compacted density of the second positive electrode active material under 3T is greater than 2.0 g/cm³ and optionally greater than 2.2 g/cm³.

15. The positive electrode active material according to any one of claims 1 to 14, wherein the second positive electrode active material further comprises carbon, the carbon coating surface of a compound LiₐAₓMn_{1-y}B_{y}P_{1-z}C_{z}O₄₋ₙDₙ.

16. A method for preparing a positive electrode active material, comprising the following steps:
providing a first positive electrode active material and a second positive electrode active material; and
mixing the first positive electrode active material and the second positive electrode active material, wherein
the first positive electrode active material comprises a compound LiNi_{b}Co_{d}MnₑM_{f}O₂ and the second positive electrode active material comprises a compound LiₐAₓMn_{1-y}B_{y}P_{1-z}C_{z}O₄₋ₙDₙ, wherein a, b, d, e, f, x, y, z, n, M, A, B, C, and D are defined according to any one of claims 1 to 15;
optionally, the first positive electrode active material further comprises lithium carbonate and/or lithium hydroxide; and
optionally, the second positive electrode active material further comprises carbon coating the surface of the compound LiₐAₓMn_{1-y}B_{y}P_{1-z}C_{z}O₄₋ₙDₙ.

17. A positive electrode plate, comprising a positive electrode current collector and a positive electrode film layer disposed on at least one surface of the positive electrode current collector, wherein the positive electrode film layer comprises the positive electrode active material according to any one of claims 1 to 15 or a positive electrode active material prepared by using the method according to claim 16, and optionally, based on total weight of the positive electrode film layer, a percentage of the positive electrode active material in the positive electrode film layer is greater than 10% by weight and more optionally is 95%-99.5% by weight.

18. A secondary battery, comprising the positive electrode active material according to any one of claims 1 to 15, or a positive electrode active material prepared by using the method according to any claim 16, or the positive electrode plate according to claim 17.

19. A battery module, comprising the secondary battery according to claim 18.

20. A battery pack, comprising the battery module according to claim 19.

21. An electric apparatus, comprising at least one of the secondary battery according to claim 18, the battery module according to claim 19, and the battery pack according to claim 20.
